# EUROPEAN PATENT SPECIFICATION

(11) **EP 1 778 061 B1**
(45) Date of publication and mention of the grant of the patent: **23.07.2008**
(21) Application number: 04791929.5
(22) Date of filing: 28.10.2004
(51) Int. Cl.: A47J 31/30

(54) **EQUIPMENT FOR THE PREPARATION OF A HOT BEVERAGE**
VORRICHTUNG ZUR ZUBEREITUNG VON HEISSGETRÄNKEN
APPAREIL DE PREPARATION DE BOISSON CHAUDE

(30) Priority: 20.07.2004 WO PCT/IT2004/000393
(43) Date of publication of application: 02.05.2007
(73) Proprietor: BIALETTI INDUSTRIE S.P.A., 25030 Coccaglio (Brescia) (IT)
(72) Inventor: RANZONI, Francesco c/o Bialetti Industrie S.p.A., I-25030 Coccaglio (Brescia) (IT)
(74) Representative: Siniscalco, Fabio
(86) International application number: PCT/IT2004/000595
(87) International publication number: WO 2006/008768

(56) References cited:
- EP-A- 1 093 746
- IT-B- 1 171 070
- US-A- 3 077 156

## Description

. This invention relates to equipment for the preparation of a hot beverage.

. According to further aspects, this invention relates to methods for the preparation of some types of hot beverages and valve means designed for use in such methods or equipment for the preparation of a hot beverage.

. This invention relates in particular to the field of equipment for the production of a coffee infusion conventionally known as a coffee-maker or moka.

. Coffee-makers which make it possible to provide a coffee infusion by conventional means are known. Coffee-makers which make it possible to provide a frothy coffee infusion are also known.

. Coffee-makers of the known type do not offer great versatility in use which renders them suitable for easily obtaining a wide range of hot beverages such as cappuccino, milk with a dash of coffee and others.

. Attempts to achieve this have not been successful from the industrial or commercial points of view because of difficulties in manufacture and use, and the complexity of the equipment and therefore its corresponding cost.

EP-A-1093746 shows a coffee maker valve for the production of frothed white coffee having a shutter blocked by a lever when it is raised in an open position.

. The object of this invention is to devise and provide equipment and valve means for preparing a hot beverage which make it possible to satisfy the above requirement and at the same time make it possible to overcome the disadvantages which have been mentioned above with respect to the known art. A further object of this invention is to devise and provide methods for preparing various types of hot beverages using equipment of the coffee-maker or moka type.

. In particular the object of this invention is to provide equipment which is extremely versatile and simple to make and use.

. This object is accomplished through equipment according to claim 1. The dependent claims relate to advantageous embodiments of the equipment.

. Other advantages and characteristics of the equipment, the valve means and methods according to the invention will become clear from the following detailed description which is given with reference to embodiments provided in the appended drawings which are provided purely by way of non-limiting example and in which:

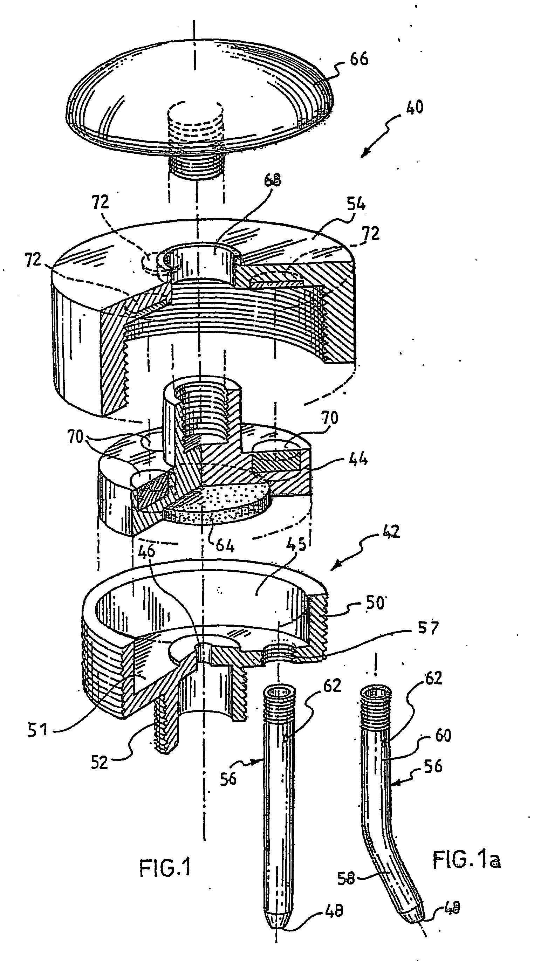

. Figure 1 illustrates a perspective exploded view in partial cross-section of valve means suitable for use in equipment for the preparation of a hot beverage. This embodiment is not within the scope of the claims.

. Figure 1a illustrates a possible variant of the embodiment in Figure 1,

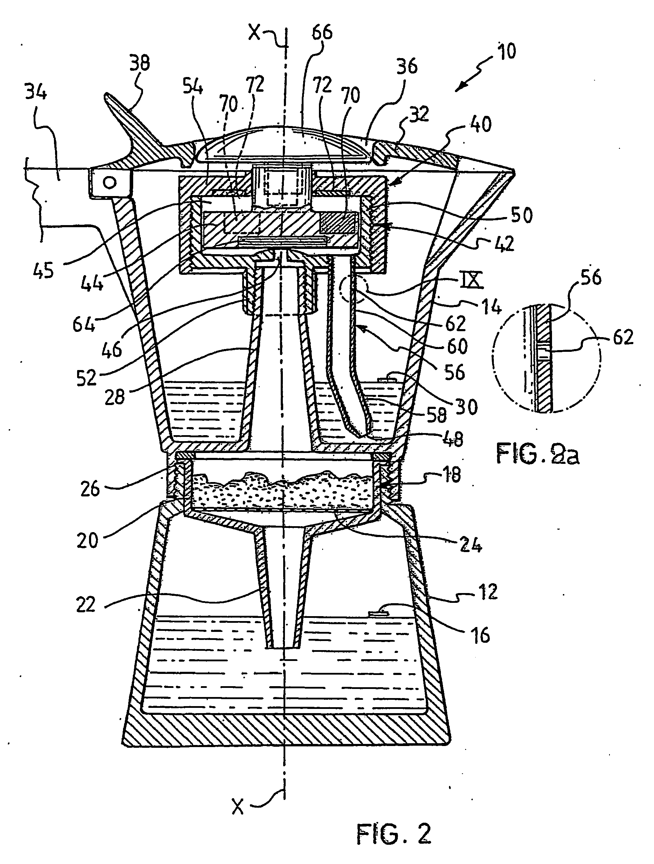

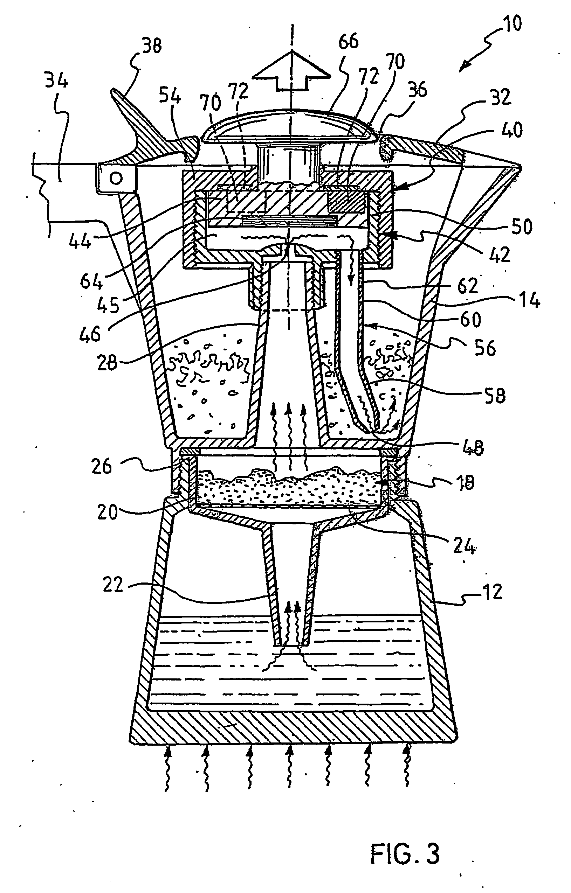

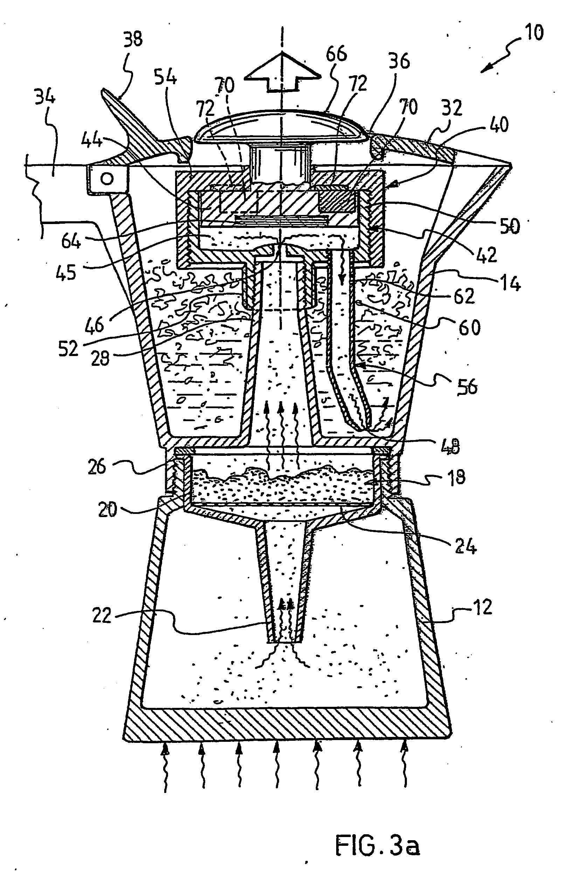

. Figures 2, 3 and 3a illustrate a longitudinal cross-section through equipment for the production of a hot beverage under different operating conditions, said embodiment not being within the scope of the claims.

. Figure 2a illustrates an enlarged detail of Figure 2,

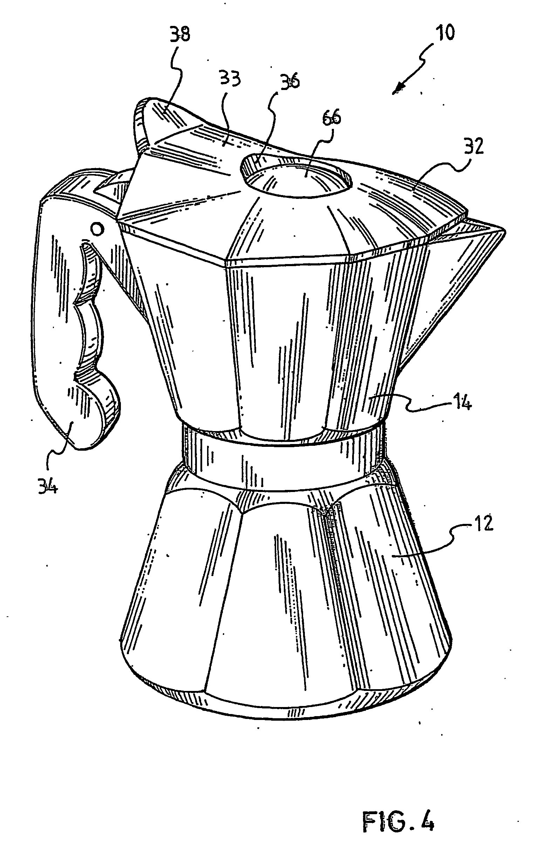

. Figure 4 illustrates a perspective view of equipment for the production of a hot beverage according to a possible embodiment,

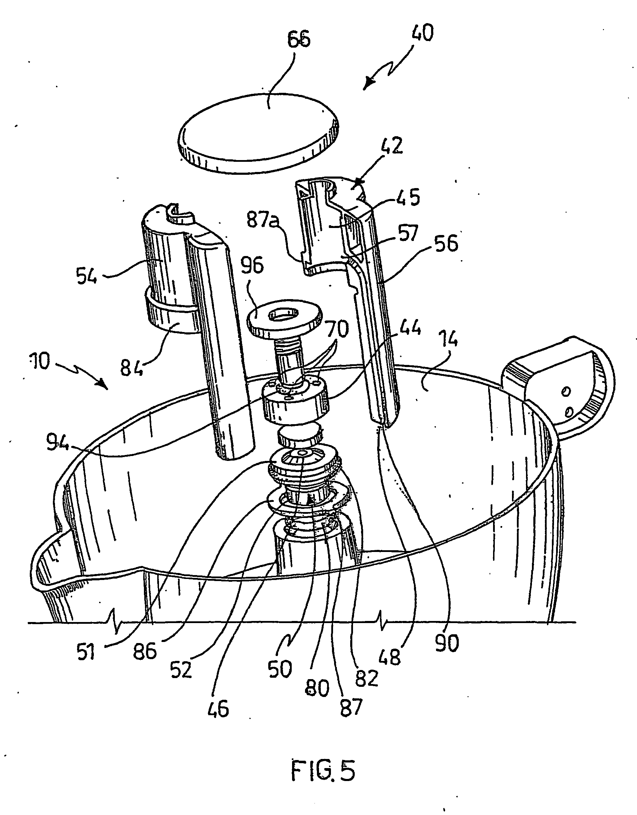

. Figure 5 illustrates an exploded view of a possible embodiment of valve means suitable for use in equipment for the preparation of a hot beverage, said embodiment not being within the scope of the claims.

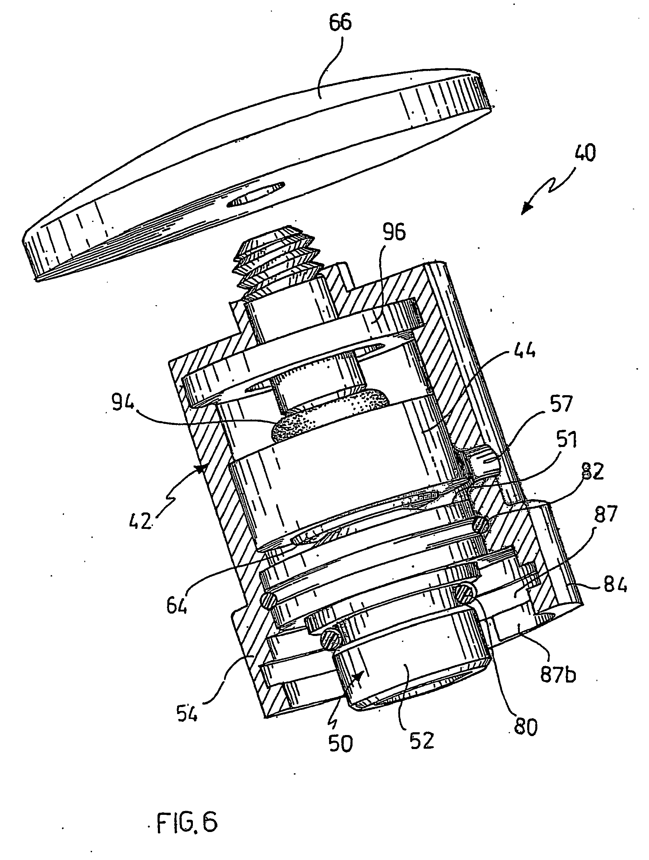

. Figure 6 illustrates a cross-sectional view of some details of the valve means in Figure 5,

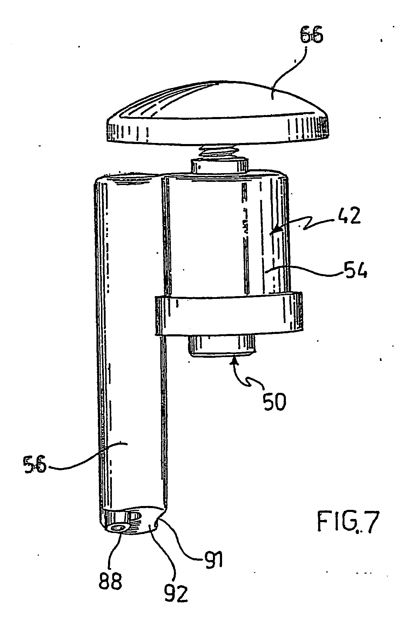

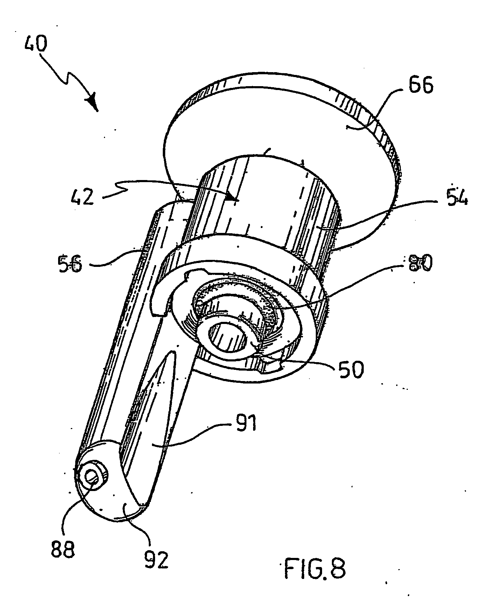

. Figures 7 and 8 illustrate respectively a side view and a perspective view of a possible embodiment of the valve means in Figure 5,

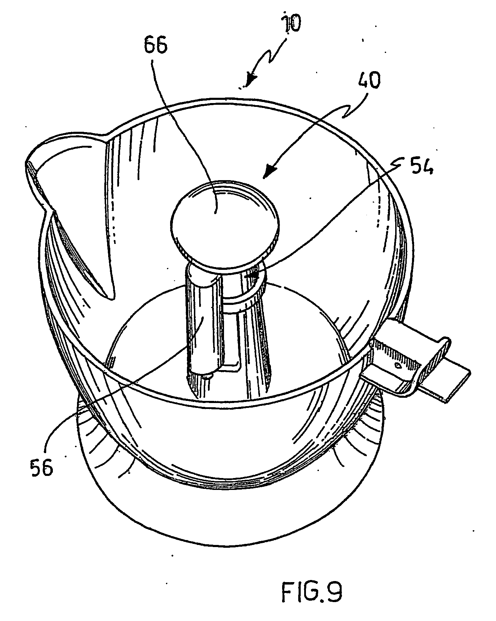

. Figure 9 illustrates a diagrammatical perspective view of a portion of equipment according to this invention provided with valve means according to Figures 7 and 8,

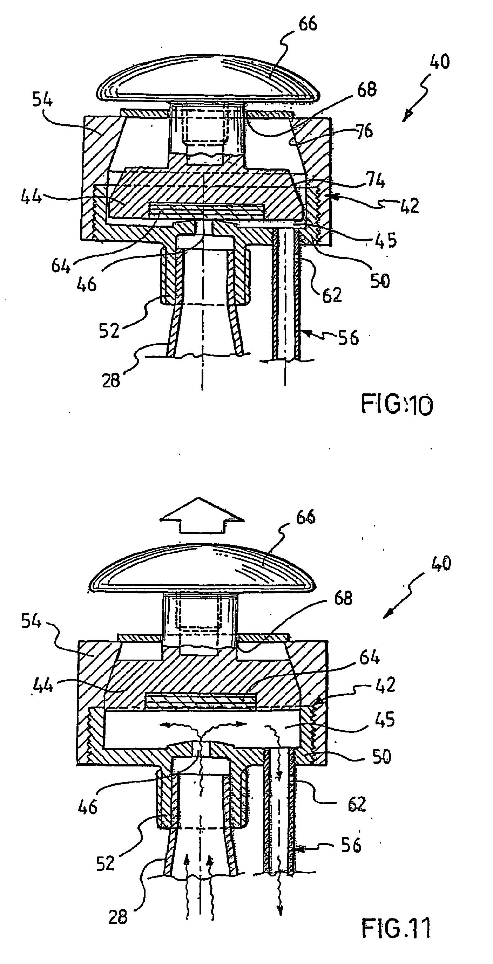

. Figures 10 and. 11 illustrate a cross-sectional view of a possible embodiment of valve means suitable for use in equipment for the preparation of a hot beverage, said embodiment not being within the scope of the claims.

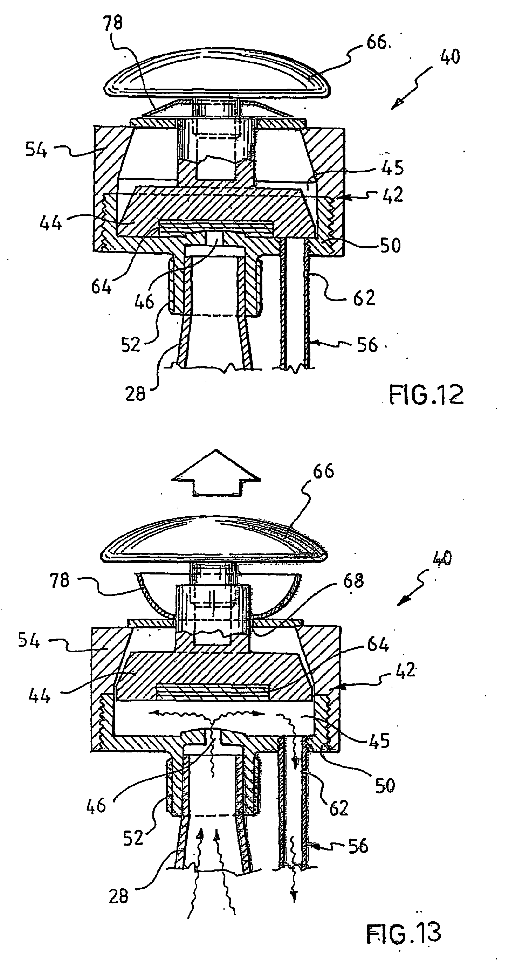

. Figures 12 and 13 illustrate a cross-sectional view of a possible embodiment of valve means suitable for use in equipment for the preparation of a hot beverage, said embodiment not being within the scope of the claims.

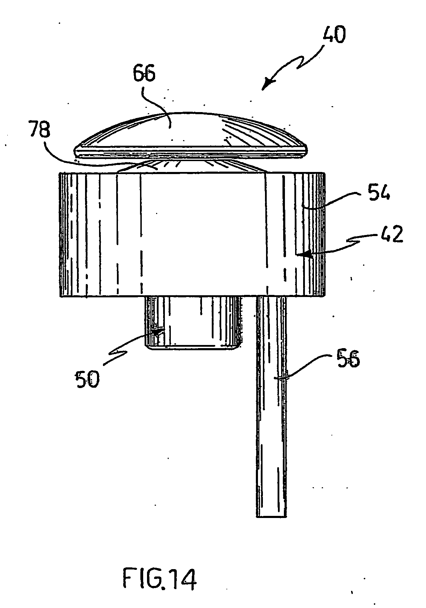

. Figure 14 illustrates a side view of a possible embodiment of valve means suitable for use in equipment for the preparation of a hot beverage, said embodiment not being within the scope of the claims.

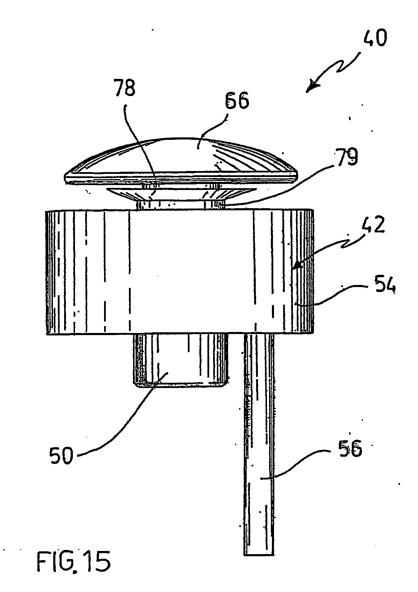

. Figure 15 illustrates a side view of the valve means in Figure 14 in a different operating condition,

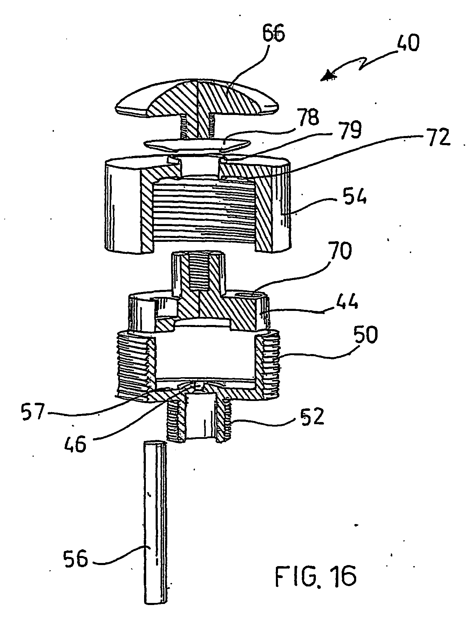

. Figure 16 illustrates an exploded view in partial cross-section of the valve means in Figure 14,

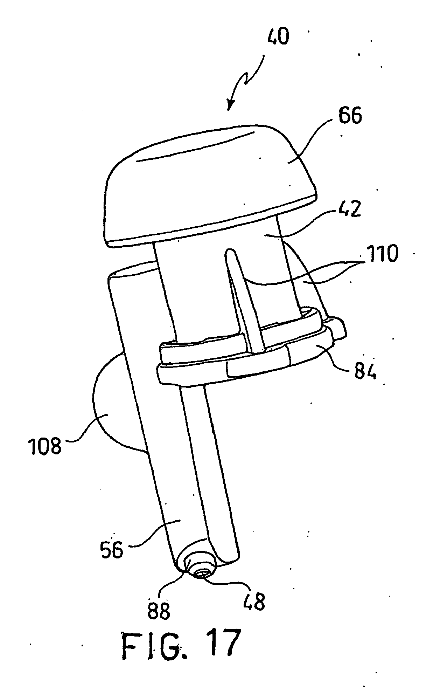

. Figure 17 illustrates a perspective view of a possible embodiment of the valve means according to the present invention;

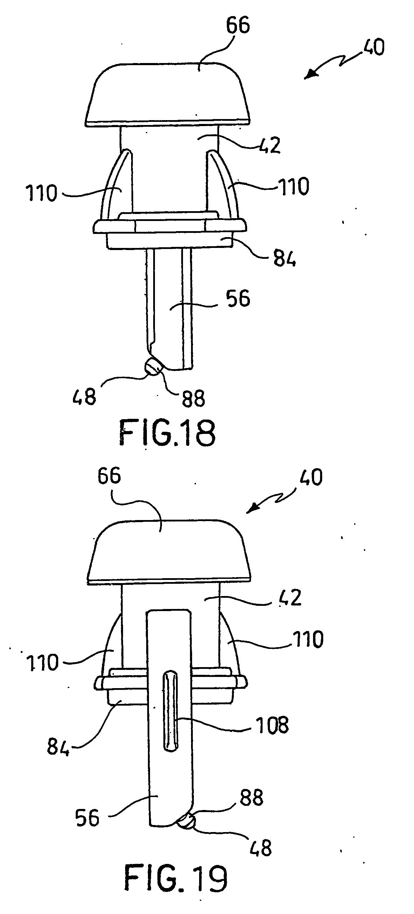

. Figure 18 illustrates a front view of the valve means from figure 17;

. Figure 19 illustrates a back view of the valve means from figure 17;

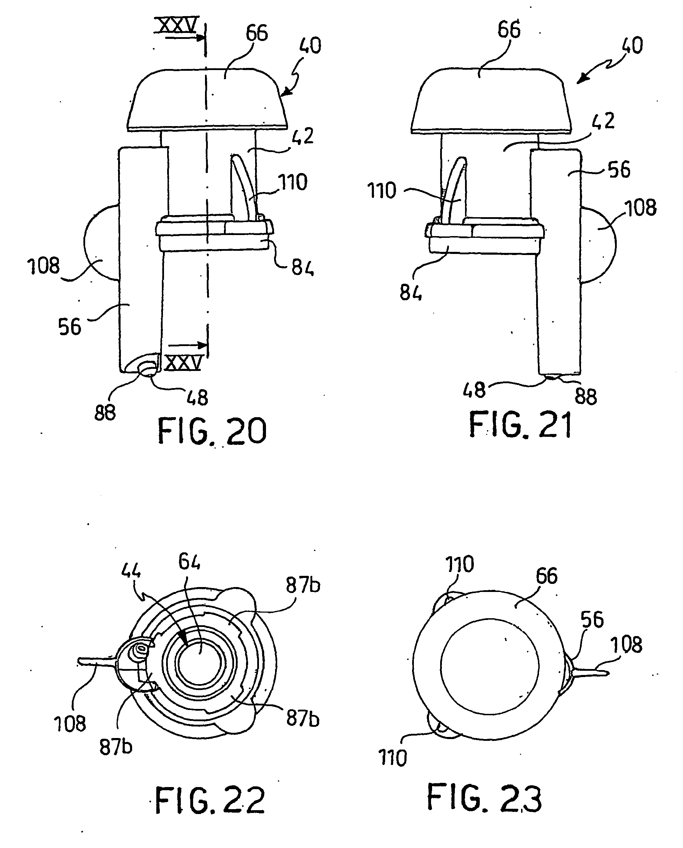

. Figure 20 illustrates a side view of the valve means from figure 17;

. Figure 21 illustrates a side view of the valve means from figure 17 according to a different orientation relative to figure 20;

. Figure 22 illustrates a bottom view of the valve means from figure 17;

. Figure 23 illustrates a top view of the valve means from figure 17;

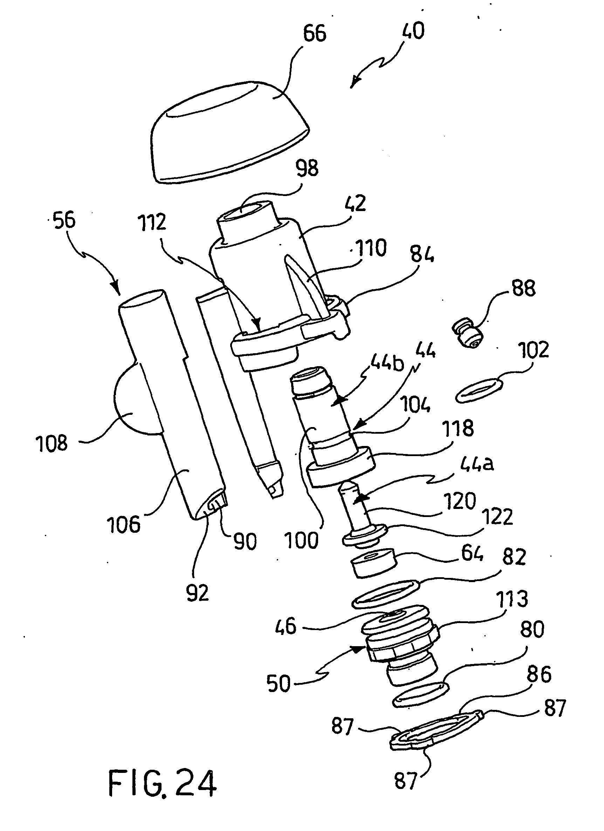

. Figure 24 illustrates a cut-away perspective view of the valve means from figure 17;

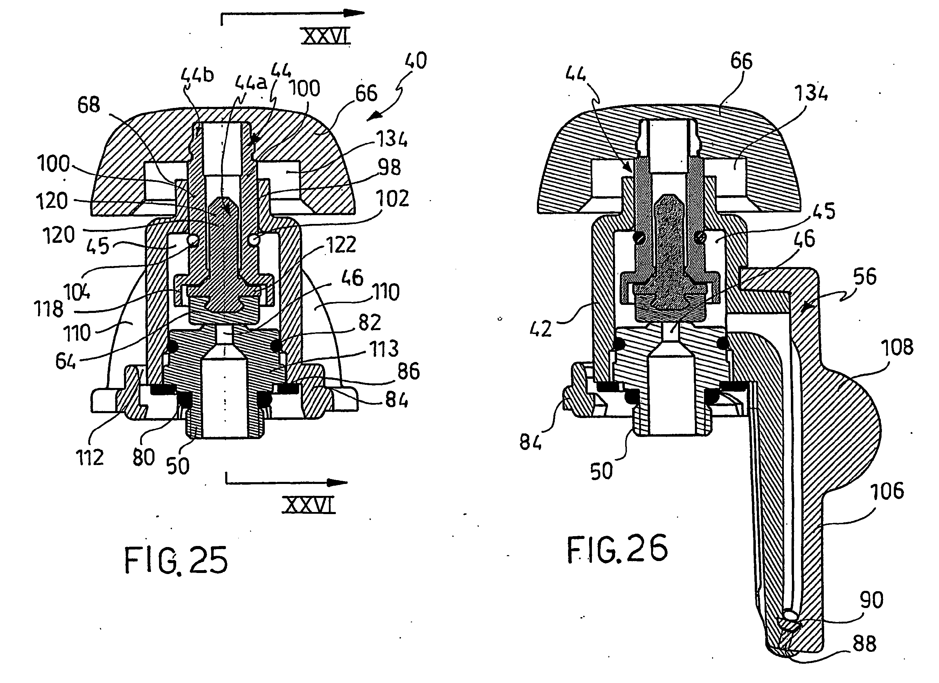

. Figure 25 illustrates a sectional view of the valve means taken along the line XXV-XXV from figure 20;

. Figure 26 illustrates a sectional view of the valve means taken along the line XXVI-XXVI from figure 25;

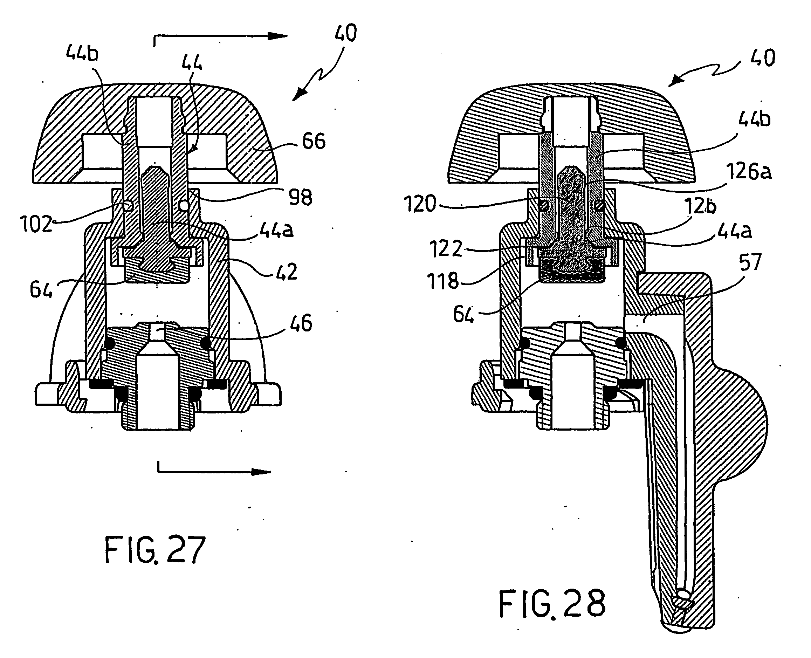

. Figure 27 illustrates the sectional view from figure 25 in a different operative condition;

. Figure 28 illustrates the sectional view from figure 26 in a different operative condition;

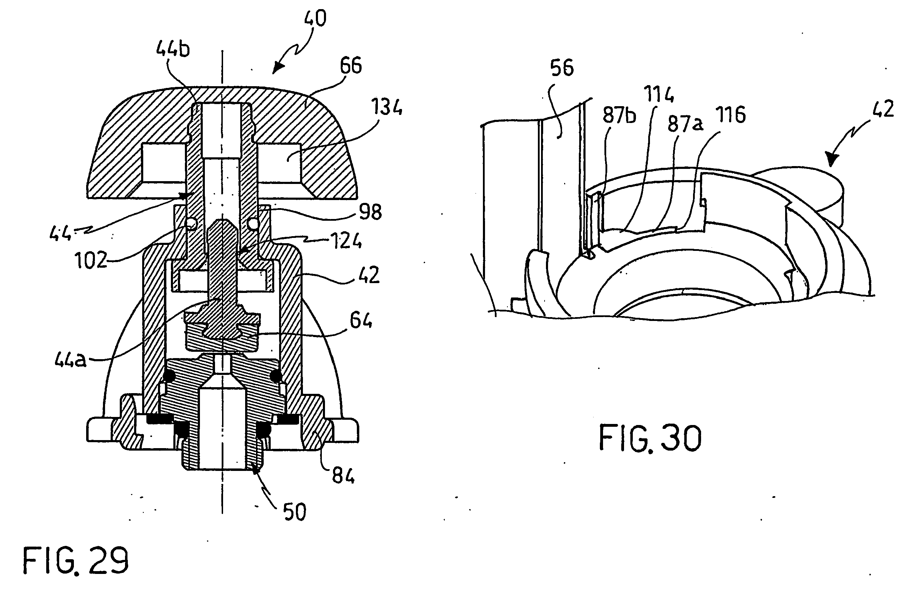

. Figure 29 illustrates the sectional view from figure 25 in a different operative condition;

. Figure 30 illustrates a partial perspective view from the bottom of the valve means from figure 17;

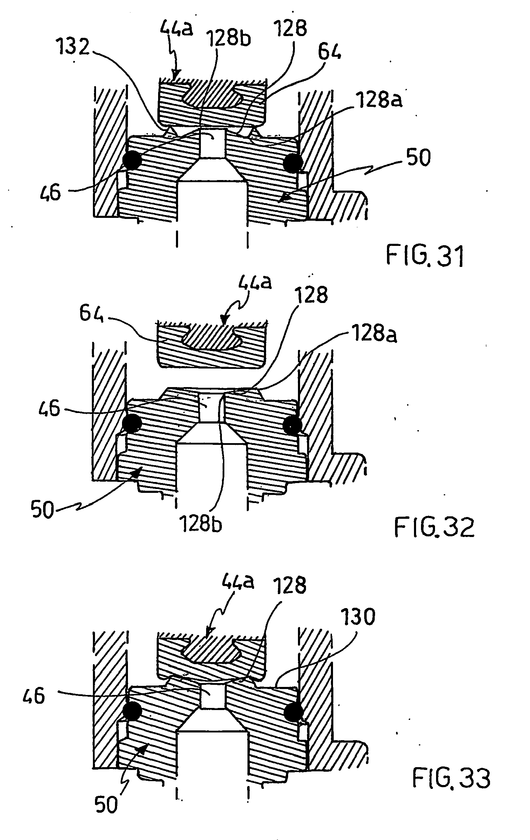

. Figure 31 illustrates the sectional view from figure 25 in a different operative condition and according to a different embodiment;

. Figure 32 illustrates the sectional view from figure 25 in a different operative condition and according to a different embodiment;

. Figure 33 illustrates the sectional view from figure 32 in a different operative condition.

. With reference to the above figures, 10 indicates as a whole equipment for the preparation of a hot beverage. According to a possible embodiment the hot beverage may comprise at least one first liquid component and one second preferably liquid component which is miscible with the first component.

. The equipment to which this invention relates belongs to the sector of coffee-makers, more commonly known as moka, but is more versatile and reliable than known coffee-makers in that it makes it possible to obtain a wide range of beverages among which it is possible to mention, purely by way of example, cappuccino, latte, foamy or non-foamy coffee and foamy hot milk.

. In the description which follows particular reference will be made to use of the equipment to prepare a cappuccino or a hot beverage comprising milk and coffee infusion and characterised by the presence of milk foam which renders it particularly pleasant. In this case the first liquid component comprises water and the second component comprises milk in liquid form. Obviously the equipment according to the invention is in any event capable of preparing a wide range of hot beverages, not exclusively cappuccino, as will be illustrated below by way of example.

. With reference to the various embodiments illustrated, common functional elements are indicated by the same reference numbers.

. Equipment 10 comprises a boiler 12 suitable for holding the first liquid component of the beverage. In the specific instance in which it is desired to obtain cappuccino, the first liquid component for example comprises water. A collection container 14 is located above boiler 12, preferably screwed thereto. According to a possible embodiment collection container 14 can contain the second component of the beverage, if specified. In the specific case in which the beverage being prepared is cappuccino, the second component of the beverage comprises for example milk in liquid form.

. According to a possible embodiment, a reference mark 16 located at a predetermined height above the bottom of the boiler may be advantageously provided along the inner surface of boiler 12. Reference mark 16 may for example comprise a line in relief indicating the filling level for the first liquid component (for example water) in the boiler.

. Boiler 12 also comprises a safety valve, not illustrated, fitted in a wall of the boiler.

. 18 indicates a container which can be inserted into the open mouth of boiler 12. The container is designed to contain a further component of the hot beverage which in the specific instance in which it is desired to prepare a cappuccino for example comprises ground or powdered coffee.

. Container 18 comprises a bowl 20 which is extended beneath by a tube 22 which is for example connected to the bowl through a flared portion. The base of the bowl comprises at least one filter 24 for example comprising a disk with a plurality of small holes. According to one embodiment container 18 also comprises an edge 26 designed to rest on the upper edge of the open mouth of boiler 12.

. In the assembled position of equipment 10, container 18 is inserted into the boiler in such a way that tube 22 extends within the boiler. In addition to this collection container 14 is screwed to boiler 12 above container 18 as for example illustrated in Figure 2.

. Within collection container 14, preferably centrally therewith, there arises a delivery pipe 28 which is open at the top and bottom. The delivery pipe extends along an axis X which under the normal conditions of use of the equipment lies in a substantially vertical direction.

. Lower opening of delivery pipe 28 is in communication with boiler 12, in particular with container 18, for example through the intermediary of a further filter, not illustrated, which forms the base of the collection container. The upper opening of delivery pipe 28, that is the outlet of delivery pipe 28, empties into collection container 14. In accordance with a possible embodiment the outlet of the delivery pipe is provided with a threaded portion.

. According to a possible embodiment, a reference mark 30 located at a predetermined height above the base of the collection container may advantageously be provided along the inner surface of collection container 14. Reference mark 30 may for example comprise a line in relief indicating the filling level for the second component (for example milk, if specified) in the collection container.

. In the examples illustrated, tube 22, container 18 and delivery pipe 28 constitute means defining a delivery path for the third liquid component, for example water, from the boiler to the collection container. The means defining a delivery path may however be provided differently.

. 32 indicates a lid for the equipment, mounted on the collection container. The lid is advantageously hinged on one side of the collection container, for example on the side of a handle 34. In accordance with a possible embodiment lid 32 has an opening 36. Preferably the opening is made in the portion located above delivery pipe 28, even more preferably in a central portion of the lid.

. In accordance with the possible embodiment lid 32 has a graspable element 38 located in an off-centre position on the lid. Graspable member 38 is for example located between opening 36 and handle 34, advantageously in a projecting portion 33 of the lid.

. Equipment 10 advantageously comprises valve means 40 located along the delivery path for the first liquid component. Figures 1 and 1a illustrate an exploded perspective view in partial cross-section of two embodiments of valve means 40.

. According to a possible embodiment the valve means are located at the outlet of delivery pipe 28, preferably along axis X.

. According to a possible embodiment, valve means 40 comprise a valve body 42 in which there is housed a plug 44 which can move between a closed position and an open position along the delivery path according to the pressure within the boiler. Plug 44 can for example move in a direction coinciding with the direction of gravity, and in particular with the X axis. In this way the weight of the plug acts on the plug tending to move it into or hold it in a closed position and the force deriving from the pressure in the boiler tends to push it into an open position (upwards with reference to normal use of the equipment).

. Valve body 42 defines a chamber 45 in which there is housed plug 44 and is provided with an inlet 46 which can be placed in communication with the outlet of the delivery path and an outlet 48 which can be placed in communication with collection container 14.

. With reference to the example illustrated in Figure 1, the valve body comprises a seat 50 which can be fitted in delivery pipe 28. In particular seat 50 has a cylindrical wall which laterally bounds chamber 45 and an end 51 in which inlet 46 is provided. From the bottom of seat 50 there extends beneath a threaded portion 52 which can be attached to the threaded portion of delivery pipe 28. In the situation in Figure 1 the thread for the valve means is external so that it can be screwed internally into the delivery pipe, wheres in Figures 2, 3 and 3a the valve means are screwed to the delivery pipe externally.

. Advantageously, the seat 50 of the valve body 42 defines a nozzle communicating with the delivery pipe 28. The inlet 46 defines the passage section of this nozzle and the outlet section from the delivery pipe 28.

. Valve body 42 also comprises a cap 54 mounted on the seat to close chamber 45. Advantageously lid 42 is screwed to seat 50, preferably to the cylindrical wall.

. According to a possible embodiment, inlet 46 of valve body 44 is located centrally in the bottom of seat 50. In other words inlet 46 has the same access as delivery pipe 28.

. According to a possible embodiment, outlet 48 from valve body 44 is located laterally at the inlet with respect to the X axis of delivery pipe 28.

. Advantageously delivery pipe 28 has an extension within collection container 14 such as to keep inlet 46 of the valve body above the surface of the hot beverage present in the collection container (Figure 3a).

. According to a possible embodiment, outlet 48 from valve body 44 lies at a level lower than inlet 46 along the X axis with reference to the normal condition of use of the equipment. Advantageously valve body 44 comprises at least one conduit 56 having a free end defining outlet 48 from the valve body. Preferably the free end has a smaller cross-section than the remaining part of the conduit, for example in the shape of a nozzle.

. According to a possible embodiment, conduit 56 extends below the bottom of valve body 44, in communication with chamber 45 through an opening 57. Advantageously the full length of conduit 56 is located beneath inlet 46 of valve body 44.

. In accordance with a possible embodiment, conduit 56 is straight. Figure 1 illustrates a possible embodiment in which the conduit extends in a single direction, preferably parallel to the X axis. Figure 1a illustrates a different embodiment in which advantageously conduit 56 has a terminal portion 58 which is inclined with respect to a portion 60 of the conduit attached to the valve body. Advantageously terminal portion 58 is inclined with respect to the direction of the X axis of delivery pipe 28. Even more advantageously the terminal portion 58 of conduit 56 is inclined in a direction tangential to a circumference centered on the X axis of the delivery pipe.

. According to a possible embodiment, conduit 56 comprises at least one portion parallel to the X axis of the delivery pipe, for example attachment portion 60.

. Advantageously conduit 56 is mounted on valve body 44 in a movable manner. It may for example be fitted through a threaded or a snap connection or by other means.

. In accordance with a possible embodiment, valve body 44 comprises means to avoid the beverage being sucked back along the delivery path into the boiler. Advantageously these means are constructed as vent means. In accordance with a possible embodiment the vent means comprise a capillary opening 62 provided in the valve means. Preferably capillary opening 62 is located at a level which remains above the level of the hot beverage present in collection container 14. Even more preferably the capillary opening lies in the wall of conduit 56 (Figure 2a) close to the bottom of the valve body.

. In accordance with a possible embodiment, plug 44 has a shape such as to be housed within chamber 45, preferably a cylindrical shape. Advantageously a seal 64 is located on the face of the plug closing inlet 46 of the valve body. In accordance with a possible embodiment seal 64 is fixed in a seat of the plug or directly on the face of the plug which closes inlet 46 of the valve body.

. In accordance with a possible embodiment the plug comprises a portion 66 which extends outside the valve body through opening 68 and which, for example, may take the form of a plunger. Opening 68 is located opposite the delivery pipe, for example in the lid of the valve body. In particular portion 66 which extends outside the valve body comprises a portion having dimensions larger than the.dimensions of opening 68. In accordance with a possible embodiment the weight of the plug is calibrated in such a way that the delivery path opens at a particular pressure in the boiler which is sufficient to raise the plug. Advantageously the plug is calibrated by specifying the materials and dimensions of portion 66.

. Advantageously portion 66 which extends outside the valve body is mounted on the plug through opening 68 of the valve body. For example portion 66 which extends outside the valve body is screwed to the plug. In accordance with other embodiments portion 66 is inserted into the plug by a snap fitting or by other means of attachment.

. In accordance with a possible embodiment, in the assembled configuration of equipment 10 and with lid 32 closed onto the collection container, openings 36 of lid 32 is capable of at least partly receiving portion 66 of the plug which extends outside valve body 44. In other words portion 66 of the plug is at least partly accessible from outside the equipment through opening 36 in lid 32. Again in other words the dimensions of opening 36 are such as to at least partly receive portion 66.

. Advantageously the valve means comprise means to immobilise the plug in the position in which the delivery path is open. These means are for example motivated by movement of the plug between the closed position and the open position. In other words the plug is immobilised in the open position through movement of the plug itself from the closed (lowered) position to the open (raised) position in the delivery path.

. A first means whereby the means for immobilising the plug may be operated may occur during heating of the equipment, in particular when a particular pressure is reached within the boiler sufficient to raise the plug. In fact the first liquid component rises along the delivery path and pushes the plug from its initial closed position to the open position activating the means for immobilising the plug.

. A second means whereby the means for immobilising the plug may be activated may be available before heating the equipment, during the stage of preparing the equipment according to the beverage which it is desired to obtain, or during the stage of setting the operating means of the equipment. This second means provides that it is the user who raises the plug pulling portion 66 upwards until the means for immobilising the plug are activated.

. In accordance with the possible embodiment the means for immobilising the plug comprise at least one pair of members 70, 72 designed to interact magnetically with each other, in particular to attract each other through magnetic force, for example a pair of magnets of opposing polarities or a magnet and a member of ferromagnetic material.

. Advantageously a first member 70 of the said pair of members is mounted on plug 44 and a second member 72 of the said pair of members is mounted on a fixed portion, for example on the valve body housing the plug, preferably on the lid of the valve body. In accordance with a different embodiment a first member may comprise the plug itself or a second member may comprise the valve body.

. Advantageously the means for immobilising the plug in the open position are located within the valve body.

. In the example illustrated in Figure 1, at least three pairs of members which can attract each other by magnetic force are provided. In this case each pair is located approximately 120° from the others. According to a different embodiment at least two pairs of members capable of attracting each other by magnetic force may be provided.

. The embodiment illustrated in the figures' provides advantageously that the means for immobilising the plug are shaped in such a way that they can be activated and deactivated by an action applied along the direction of movement of the plug, as will be described below.

. In particular the immobilising means are shaped in such a way as to be activated by the movement of the plug itself from the closed position to the open position. As will be described below, this movement of the plug and therefore this activation may be brought about by the pressure within the boiler, that is at the time of delivery, or by the user by setting the operating mode of the equipment.

. In addition to this the means for immobilising the plug are shaped in such a way that they can be deactivated by exerting a force directly on the plug designed to return it to the closed position. This force is advantageously exerted directly on the plunger portion of the plug which extends outside the valve body.

. A description of the operation of an item of equipment according to this invention is provided below with reference to Figures 2, 3 and 3a. With reference to the example illustrated, the equipment is designed to prepare a hot beverage commonly known as cappuccino. Other possible uses will be described below.

. A quantity of water is placed in boiler 12, for example up to reference mark 16. Container 18 for ground coffee is placed in the open mouth of the boiler and a quantity of ground coffee is placed in container 18. Collection container 14 is screwed onto boiler 12 and a quantity of milk is placed in collection container 14, for example up to level 30. The configuration described above is for example illustrated in Figure 2 in which the configuration of the valve means, that is the plug in the closed (or lowered position), may be seen. This initial configuration is particularly advantageous for preparing cappuccino in that it makes it possible to raise the pressure and temperature conditions in the boiler at the time when delivering the coffee infusion, thus achieving a high delivery rate for the infusion resulting from that pressure value. The weight of plug 44 and outlet diameter 48 contribute to operation of the equipment.

. The equipment is then placed on a source of heat in such a way as to heat the boiler. The water and air within the boiler heat up causing an increase in pressure within the boiler. As pressure increases the first liquid component (which in the case of the preparation of a cappuccino is water), begins to rise up the delivery path, that is along tube 22, cup 20 and delivery pipe 28. In passing through the ground coffee the water expands and irrigates all the coffee powder producing a coffee infusion.

. Plug 44 however remains in the closed position, that is in the lowered position, until a particular pressure is reached within the boiler, which is greater than atmospheric pressure and capable of raising the plug. When this pressure is reached the plug rises and reaches the open position. The coffee infusion leaves delivery pipe 28 through chamber 45 and pours into collection container 14 through outlet 48. Because of the presence of the valve means the rate at which the coffee infusion leaves is particularly high.

. The thrust exerted on plug 44 and the consequent movement of the plug from the closed position to the open position activates the means for immobilising the plug. In the situation illustrated in Figure 3 the magnets located on the plug are attracted by those provided on the valve body holding the plug in the open or raised position. Movement of the plug can be seen from the outside as a result of the movement of plunger portion 66 which, if present, passes at least partly through opening 36 in the lid.

. The coffee infusion leaves the nozzle of conduit 56 and pours into the milk present in the collection container, mixing with it (Figure 3). The milk is heated through both the effect of mixing with the coffee infusion and through thermal conductivity by the material of the equipment.

. By immobilising the plug, the delivery pipe is held open until all the coffee infusion and vapour produced by the residual water present in the boiler has been delivered (Figure 3a), that is even when the pressure within the boiler falls beneath the value sufficient to raise the plug.

. In addition to heating the milk, delivery of the coffee infusion and in particular the subsequent delivery of steam generate turbulence in the milk as a result of which the steam comes into intimate contact with the milk and forms a foam which makes it possible to prepare the so-called cappuccino. With this object outlet 48 is located in such a way as to lie beneath the level of liquid in collection container 14.

. When delivery of the coffee infusion and steam is complete, it is possible to pour out the cappuccino and restore the equipment for further use. If the further use is that of obtaining another cappuccino, it is preferable to restore the valve means to the initial position (Figure 2), that is it is necessary to return the plug to the closed position, that is the lowered position.

. In the case of the equipment in Figure 3a it is sufficient to press on plunger portion 66 so as to overcome the magnetic force holding the plug in the raised position. The position of the plug can be clearly seen both with lid 32 raised and with lid 32 lowered.

. In the situation in which the cappuccino is left in the equipment for sufficient time to cause the boiler to cool, the pressure within the boiler may fall sufficiently to suck the beverage contained in the collection container within it back through conduit 56. The presence of means to prevent sucking-back prevents the beverage from returning along the delivery path to the boiler. In the specific case of the vent means and in particular opening 62, sucking back is prevented in that the negative pressure within the boiler draws in air through the vent means and in particular opening 62.

. The presence of vent means therefore prevents cappuccino from being sucked back from the collection container along conduit 56, valve means 40 and delivery pipe 28 to reach the boiler if negative pressure occurs within the boiler as a result of cooling of the equipment.

. In the situation in which ground coffee is not placed in container 18, this equipment can be used to heat and/or foam the milk present in the collection container through hot water and steam from the boiler.

. In the situation in which the valve means are initially set immobilising the plug in the open position, the final result is a hot beverage for example of the "latte macchiato" or "caffè latte" type, that is a non-foamy beverage.

. In accordance with a possible embodiment this invention relates to a method for preparing cappuccino using a coffee-maker or moka comprising a boiler, a container for ground coffee and a collection container. This method comprises the stages of:

. Providing the coffee-maker with a quantity of water in the boiler, a quantity of ground coffee in the container for ground coffee and a quantity of milk in the collection container of the coffee-maker,

. Heating the boiler to an excess pressure with respect to atmospheric pressure in which a plug located along a delivery path for the coffee infusion from the boiler to the collection container opens the said delivery path,

. Immobilising the said plug in the position in which the delivery pipe is open until all the coffee infusion and vapour present in the boiler have been delivered,

. In which the said plug is immobilised in the said position in which the delivery pipe is open through magnetic interaction or through a magnetic flux, preferably through magnetic attraction.

. According to a possible embodiment, this invention relates to a method for heating and foaming milk using a coffee-maker comprising a boiler and a collection container. This method comprises the stages of:

. Providing the coffee-maker with a quantity of water in the boiler and a quantity of milk in the collection container of the coffee-maker,

. Heating the boiler to an excess pressure with respect to atmospheric pressure in which a plug located along the delivery path for the water from the boiler to the collection container opens the said delivery path,

. Immobilising the said plug in the position in which the delivery pipe is open until all the water and steam present in the boiler have been delivered,

. In which the plug is immobilised in the position in which the delivery pipe is open through magnetic interaction or through a magnetic flux, preferably through magnetic attraction.

. The equipment according to this invention is also suitable for the preparation of other types of beverages. In order to prepare a coffee infusion or other similar products, the equipment may be used and behaves like a coffee-maker of the known type. In this case a quantity of water is placed in the boiler. This quantity of water may be different from that specified for the cappuccino. In addition to this a quantity of powdered coffee or other similar product is placed in container 18. Container 18 is positioned in the boiler and the collection container is screwed to the boiler. The equipment is then placed on a source of heat so that the temperature and pressure conditions of the water and air within the boiler increase.

. If the valve means have been initially set so that the plug is located in the closed position, that is in the lowered position with reference to the normal condition of use of the equipment, the pressure which is generated in the boiler must be capable of raising the plug before delivering the coffee infusion. The weight of the plug is calibrated in such a way that the coffee infusion leaves rapidly at the delivery pressure, so that it is particularly creamy and similar to that prepared using industrial machines.

. Alternatively it is possible to set the valve means in such a way that the plug is immediately immobilised in the open position. Not having to overcome the weight of the plug, the coffee infusion flows into the collection container in the manner of operation of a conventional coffee-maker.

. The initial setting chosen for the valve means makes it possible to control the pressure, temperature and rate conditions at the time of delivery in all possible modes of use of the equipment.

. In fact, with reference to the manner of use as a coffee-maker, this invention relates to a method for selectively obtaining a coffee infusion with or without foam by means of a coffee-maker comprising a boiler, a container for powdered coffee, and a container for collection of the coffee infusion.

. This method comprises the stages of:

. Providing the coffee-maker with a quantity of water in the boiler and a quantity of ground coffee in the container for ground coffee,

. Setting the position of a plug located along a delivery path for the water from the boiler to the collection container between a position in which the delivery path is closed and a position in which it is open, in which the plug can be immobilised in the position in which the delivery pipe is open through magnetic interaction or through a magnetic flux, preferably through magnetic attraction,

. Heating the boiler to an excess pressure with respect to atmospheric pressure in order to deliver a coffee infusion with or without foam depending upon the position in which the plug is set.

. This method can be applied to any other type of hot beverage.

. Further uses are also possible with regard to the components used, for example powdered milk, barley coffee or others. In fact, in addition to operating as a conventional moka or as a moka capable of preparing foamy coffee, this invention relates in general terms to equipment for the preparation of a hot beverage comprising at least one first liquid component and one second preferably liquid component which is miscible with the first component, in which the boiler is designed to contain the first liquid component and the collection container is designed to contain the second component.

. It is clear that variants and/or additions may be made to what has been described and illustrated above.

. With reference to the embodiment of the means for immobilising the plug in the open position, the pair of members capable of attracting each other by magnetic force may be constructed in a manner different to that described and/or illustrated. In particular the magnetic force which holds the plug in the open position may be activated or deactivated in any direction with respect to the movement of the plug.

. In addition to this it may be provided that a member of the pair of members be mounted on the plug while the other member of the said pair of members be associated with a portion of the collection container, for example the lid.

. In this case the lid may be conventional, that is without a through hole. Possibly the lid or a part thereof may be constructed of ferromagnetic material or may comprise a ferromagnetic member or a member of a pair of magnets having opposite polarity.

. The member of the said pair of members associated with the plug may advantageously be associated with a portion which extends outside the valve body housing the plug.

. Provision may also be made for other embodiments which use magnets or members capable of attracting each other magnetically and holding the plug in the open position. In particular the embodiment of immobilising means in which members capable of attracting each other by magnetic force are provided may be independent of the means of activating/deactivating the same along the direction defined by the movement of the plug. For example the two members of the pair of members capable of attracting each other by magnetic force may be deactivated in any direction.

. The entire plug may be constructed in the form of a magnet, with the provision that the other member is a magnet of opposite polarity or a ferromagnetic member. Alternatively the plug may be manufactured from ferromagnetic material, providing that the other member of the pair is a magnet.

. In accordance with a possible embodiment, the means for immobilising the plug may operate generically by means of a magnetic flux, that is by a force of attraction or by means of a force of repulsion, depending upon the shape and arrangement of the members forming the pair.

. Figures 5-9 illustrate a possible embodiment of the equipment according to this invention and in particular valve means 40.

. In accordance with a possible embodiment valve body 42 forms a chamber 45 in which there is housed plug 44 and in which there is provided an inlet 46 capable of being placed in communication with the outlet of the delivery path and an outlet 48 capable of being placed in communication with collection container 14. The plug may for example be constructed as in Figure 1 or in accordance with the other embodiments previously described. In accordance with a possible embodiment the plug is constructed of non-magnetic material (for example brass, plastics, etc.) and as in Figure 1 comprises one or more members 70 of a pair of members capable of attracting each other by magnetic force.

. Seat 50 designed to be fitted on delivery pipe 28 has a bottom 51 in which there is provided inlet 46. Unlike the seat in Figure 1 the cylindrical wall of the valve body is defined by cap 54. A threaded portion 52 extends downwards from body 51 and can engage the threaded portion of delivery pipe 28, preferably internally. In accordance with a possible embodiment, seal 80 is mounted on portion 52.

. In this embodiment, the seat 50 of the valve body 42 also preferably defines a nozzle communicating with the delivery pipe 28.

. Cap 54 forms a side or top wall for chamber 45. Advantageously cap 42 is inserted onto seat 50, as will be described below. In accordance with a possible embodiment, a seal 82 is housed between seat 50 and cap 54.

. In accordance with a possible embodiment cap 54 extends below the bottom of seat 50 with an annular portion 84 which can externally enclose an end portion of delivery pipe 28. In accordance with a possible embodiment a guide and immobilising ring 86 is inserted below seat 50, between the seat and the delivery pipe. Guide and immobilising ring 86 comprises a tooth 87 which can be inserted into a groove 87a in the valve body, more specifically in annular portion 84, through a passage 87b.

. In general terms, valve body 42 in which plug 44 is housed is movably mounted on delivery pipe 28. In particular seat 50 of valve body 42 is movably mounted on delivery pipe 28 and cap 54 is movably mounted on seat 50. In the situation in Figure 1 the cap is screwed onto the seat, in the situation in Figure 5 the cap is immobilised on delivery pipe 28 by seat 50. In other words cap 54 comprises a bayonet connection with the delivery pipe. This bayonet connection is provided by means of the coupling between groove 87a and tooth 87.

. Advantageously the bayonet connection is provided between delivery pipe 28 and annular portion 84 of cap 54 which is capable of externally enclosing an end portion of the delivery pipe.

. According to a different embodiment, which is not illustrated, the bayonet connection is provided directly between the delivery pipe and the cap, or the valve body, for example by providing a tooth directly on the delivery pipe.

. In accordance with the embodiments described and illustrated above, the valve body 42 is removably mounted on the delivery pipe 28 and is further provided such as to be divided in two parts, thereby in normal use one part is preferably associated to the delivery pipe, the other one being removable. In other words, the seat 50, being preferably shaped as a nozzle, is removably mounted on the delivery pipe and preferably remains associated thereto. The cap 54 completes the valve body 42 and is provided to be disassembled from the equipment also independently from seat 50. In other words, the cap 54 is, in turn, removably mounted on the delivery pipe and/or the seat 50 to complete the valve body 42.

. Advantageously conduit 56 is made of one piece in the valve body, more specifically in cap 54. In more detail, cap 54 is made in two parts which divide it in half along a longitudinal plane which also divides conduit 56. The two halves are capable of being attached to each other and of internally receiving the members forming valve means 40. In accordance with a possible embodiment cap 54 is made of plastics material and the two halves are welded together, for example by ultrasound. In accordance with a possible embodiment conduit 56 is welded to cap 54 provided in two halves or as a single cylindrical body. Figure 6 in fact shows the valve body to which conduit 56 has not yet been welded.

. In accordance with a possible embodiment conduit 56 extends laterally from the valve body, in communication with chamber 45 through an opening 57 provided laterally in that chamber, for example in the side wall of cap 54. Preferably opening 57 is provided substantially at the same level as inlet 46. Advantageously the walls forming conduit 56 define a radial protuberance of the valve body which extends preferably over the entire height of the valve body. In the case in which conduit 56 extends laterally from the valve body, the conduit has a first curved portion and a second straight portion, for example parallel to the X axis.

. In accordance with a possible embodiment, outlet 48 is constructed in the form of a nozzle 88 which can be inserted into a widened seat 90 of conduit 56 and which preferably projects below the conduit. Advantageously a lower wall 92 of conduit 56 is inclined with respect to the X direction in such a way that nozzle 88 is also inclined with respect to the X direction.

. Nozzle 88 forms a passage having a cross-section which is less than that formed by conduit 56.

. In accordance with a possible embodiment, valve body 44 comprises means to prevent the beverage from being sucked back along the delivery path to the boiler. These means may be provided by vent means, which are not shown, and which are substantially constructed as described in relation to the embodiment in Figure 1. Alternatively the means to prevent sucking back of the beverage may comprise nozzle 88 defining a passage cross-section which is less than that formed by conduit 56 and possibly conduit 56 may be constructed laterally to the valve body as in Figure 5. This arrangement of the means for preventing sucking back, and in particular the passage cross-section of nozzle 88, cause a loss of head which prevents the beverage from being sucked back along conduit 56 before the negative pressure within the boiler returns the plug to the closed position of the delivery path and opening 57.

. In other words, the means for immobilising the plug are arranged in such a way that they can be deactivated by the negative pressure which may be generated within the boiler.

. In accordance with a possible embodiment, the walls forming conduit 56 have a recess 91 to fit on the delivery pipe.

. In accordance with a possible embodiment, plug 44 has a cylindrical shape capable of being received within chamber 45. Advantageously a seal 64 is located on the face of the plug which closes inlet 46 of the valve body. In accordance with a possible embodiment a further seal 94 is fitted on a rod of plug 44 forming portion 66 extending outside the valve body.

. In accordance with a possible embodiment, the pair of members which are capable of attracting each other by magnetic force comprise a first member comprising the plug itself or magnets (or ferromagnetic members located on the plug) and a ring 96 housed within the valve body constructed in accordance with the member selected for the plug.

. Advantageously ring 96 and plug 44 are located concentrically within the valve body.

. The functioning of the valve means in Figures 5-9 is similar to that in Figure 1. In the situation in which nozzle 88 is provided, sucking back of the beverage is prevented by the fact that the negative pressure within the boiler pulls the plug back into the closed position before the beverage can rise along conduit 56 as a result of the loss of head caused by the nozzle.

. The mounting of the loading means described above provides that seat 50 is screwed onto delivery pipe 28 with an intermediate seal 80 and guide and immobilising ring 86. Cap 54 in which the plug is housed is inserted on seat 50 in such a way that tooth 87 of guide and immobilising ring 86 is inserted into passage 87b and reaches groove 87a. By rotating cap 54 passage 87b is offset with respect to tooth 87 which is inserted into groove 87a immobilising cap 54 with respect to seat 50 and delivery pipe 28.

. In order to dismantle the valve means it is sufficient to rotate the lid until passage 87b is in line with tooth 87 and lift the lid from seat 50. In this way the components forming the equipment can be thoroughly cleaned.

. During normal use of the equipment, the seat 50 can either remain associated to the delivery pipe 28, or be disassembled for a thorough cleaning of the equipment.

. In accordance with a further embodiment the immobilising means comprise means for forming a nesting connection between the plug and a fixed portion of the equipment, for example the valve body housing the plug, in the open position for the said plug. Advantageously the immobilising means lie within the valve body housing the plug.

. A possible embodiment is for example illustrated in Figures 10 and 11. The members in common with the previous embodiments are indicated using the same reference numbers. The means for effecting a'nested connection comprise a first inclined surface 74 of the plug and a second inclined surface 76 for example of the valve body. The first inclined surface has an inclination which is different from that of the second inclined surface. The angle of inclination of the first inclined surface of the plug with respect to a direction of movement of the plug is greater than the angle of inclination of the second inclined surface of the valve body.

. The functioning of the equipment is similar to that previously described. Movement of the plug from the closed position to the open position gives rise to movable nesting between the plug and the valve body. This movement is produced by the user when setting the method of operation of the equipment or is generated by the pressure within the boiler at the time of delivery.

. In accordance with a different embodiment the movable nesting may be provided between a portion of the plug and a portion of the collection container. For example a first portion of the means for effecting a nested connection may lie in a portion of the plug outside the valve body and a second portion of the means for effecting a nested connection may lie within the lid of the collection container.

. In particular, in this case too the immobilising means may be arranged in such a way as to be activated by the movement of the plug from the closed position to the open position. As will be described below this activation may be brought about by the pressure within the boiler, that is at the time of delivery, or by the user when setting the equipment's method of operation.

. In addition the means for immobilising the plug may be arranged in such a way that they can be deactivated by exerting a force directly on the plug sufficient to return it to the closed position. This force is advantageously exerted directly on the plunger portion of the plug which extends beyond the valve body.

. The embodiment illustrated in the figures advantageously provides that the means for immobilising the plug are arranged in such a way that they can be activated and deactivated by a force exerted along the direction of movement of the plug.

. Also, with this embodiment it is possible to set the equipment's method of operation by setting the plug initially into the open or closed position.

. In accordance with a possible further embodiment the means for immobilising the plug in the open position comprise a bimetallic strip 78 interacting with the plug and capable of adopting at least two configurations corresponding to the open and closed positions of the plug respectively.

. Advantageously the bimetallic strip has a frustoconical structure.

. A possible embodiment is for example illustrated in Figures 12 and 13. Members in common with the previous embodiments are indicated by the same reference numbers. The bimetallic strip advantageously surrounds a portion of the plug around the direction of movement of the plug.

. In accordance with a possible embodiment the bimetallic strip is located between the plug and the valve body housing the plug. Advantageously the bimetallic strip is inserted outside the valve body between the valve body and a portion of the plug extending outside the valve body.

. In accordance with a different embodiment, which is not illustrated, the bimetallic strip is inserted within the valve body.

. Figures 14-16 illustrate a further embodiment comprising a bimetallic strip 78. Valve body 42 comprises a projection 79 on which one edge of the bimetallic strip is supported.

. When the equipment is in operation the heat also heats the bimetallic strip. When the plug passes from the closed position to the open position the bimetallic strip deforms immobilising the plug in the open position.

. When the strip cools it automatically returns to the undeformed configuration allowing the plug to descend. The bimetallic strip may be constructed in such a way that the means for immobilising the plug can be deactivated by exerting a force directly on the plug such as to return it to the closed position. This force may be advantageously exerted directly on the plunger portion of the plug which extends outside the valve body.

. The bimetallic strip may also be constructed in such a way that it may be also conditioned by the action of the user on portion 66 of the plug. In this way the plug can be immobilised in the open position regardless of heat in order to select the operating mode for the equipment.

. Also in the embodiments illustrated above, the portion 66 extending outside the valve body 42 has a calibrated weight to set a boiler 12 pressure value suitable to raise the plug 44.

. Further possible embodiments of the valve means 40 are for example illustrated in figures 17-32. The elements in common with the preceding embodiments have been indicated with the same numerals. The possible embodiments described above also correspond with reference to the elements in common, to possible embodiments with reference to the examples illustrated in figures 17-32.

. In accordance with a possible embodiment, the means for immobilising the plug 44 comprise means for generating friction at least along a portion of the stroke of plug 44 relative to a portion of equipment 10 which is stationary relative to the motion of the plug 44. Due to the presence of the means for generating friction, the plug can be immobilised in the open position. As illustrated for example in figure 25, the means for generating friction are interposed between the plug 44 and the valve body 42 of the valve means. Advantageously, the valve body 42 comprises a sliding seat 98 along which the plug 44 travels. This sliding seat 98 is preferably cylindrical and suitable to house a rod 100 of the plug. Advantageously, the sliding seat 98 opens to the outside of the valve body 42 and defines the opening 68 through which the plug is connected to portion 66 extending outside the body, if provided.

. In accordance with a possible embodiment, the means for generating friction are suitable to be interposed between the plug 44 and the sliding seat 98 of the valve body 42 in which the plug 44 travels.

. Advantageously, the means for generating friction enclose the plug 44, or the rod 100 thereof, if provided, and are suitable to generate friction against the walls of the sliding seat 98.

. In accordance with a possible embodiment, for example such as illustrated in figure 25, the means for generating friction are integral with the plug 44 during the movement from the closed position to the open position, and vice versa. Advantageously, the means for generating friction comprise an annular element 102, preferably a seal or an O-ring.

. In accordance with a possible embodiment, the annular element 102 is housed on the plug 44 and is suitable to generate friction against the walls of the sliding seat 98 of the valve body 42 housing the plug. Preferably, the annular element 102 is housed in an annular groove 104 of the plug 44, or the rod 100 thereof, if provided, protruding therefrom to interfere with the walls of the sliding seat 98.

. In accordance with a possible embodiment, the annular element 102 is arranged such as to generate friction in an end length of the stroke of the plug between the closed position and the open position.

. In accordance with a possible embodiment, the sliding seat 98 is cylindrical and of such dimensions as to interfere with the means for generating friction during at least a length of the plug stroke. In accordance with a different embodiment, the sliding seat 98 is slightly conical and narrows in the direction in which the plug 44 passes from the closed to the open position.

. Figures 17-32 illustrate further possible embodiments of the valve body 42, particularly with reference to the embodiment of conduit 56. Advantageously, a possible embodiment of the conduit 56 provides that it is at least partially made as one piece with the valve body 42 and comprises a closed portion 106 suitable to be applied to the valve body 42.

. In accordance with a further possible embodiment, the conduit 56 comprises an overhang 108 extending transversally thereto and the valve body 42. If the opening 36 of the lid 32 of equipment 10 is provided, the overhang 108 extends transversally to the valve body 42 for such a length as to prevent that the valve means 40 may exit from said opening. In accordance with a different embodiment, not illustrated, the overhang extends transversally to the valve body.

. In accordance with a possible embodiment, the conduit 56 comprises the nozzle 88 such as described above. Advantageously, the nozzle 88 is arranged at the outlet 48 and defines a smaller passage section than the passage section of conduit 56. Preferably, also in the embodiment illustrated in figures 17-32, the nozzle 88 is an element separate from the conduit 56 and is suitable to be inserted into the widened seat 90 of the conduit. Advantageously, the nozzle 88 projects below the conduit 56.

. In accordance with a possible embodiment, the conduit 56 comprises the lower wall 92 inclined relative to the path of the delivery pipe 28 such that the nozzle 88 is also inclined relative to the direction of the path of the delivery pipe.

. Figures 17-32 illustrate further possible embodiments of the valve body 42. According to a possible embodiment, the valve body 42 comprises at least one grip overhang 110 extending transversally to the valve body to facilitate the positioning of the valve means 40 on the delivery pipe 28. Advantageously, the grip overhang 110 takes the shape of a flap extending in the radial direction relative to the pattern of the valve body 42. Preferably, the valve body 42 comprises two grip overhangs 110 that are angularly offset along the outer wall of the valve body 42.

. In accordance with the embodiment illustrated in the figures 17-32, the grip overhangs 110 are arranged at about 120° from each other and relative to the conduit 56, particularly with reference to the portion thereof lateral to the valve body 42, if provided.

. As described above, also in this embodiment, the valve body can be provided such as to be removable relative to the equipment. Furthermore, the valve body is preferably made of two parts that are removably associated to each another and/or relative to the delivery pipe.

. In accordance with a possible embodiment, the valve body 42 comprises notches 112 being distributed along the annular portion 84 of the lid 54 enclosing the seat 50.

. In accordance with a possible embodiment, the valve means 40 being illustrated in figures 17 and subsequent ones comprise several elements that had already been described with reference to the embodiment illustrated in figures 5-9 as will be described below. For example, the lid 54 defines a side and upper walls of chamber 45 and is inserted on the seat 50 by means of the bayonet connection substantially as described above. The shape of the seat 50 is similar to that described above and there are further provided the seals 80, 82, which are arranged between the seat 50 and the delivery pipe 28, as well as between the seat 50 and the lid 54, respectively.

. In accordance with a possible embodiment not described above, the seat 50 comprises a prismatic portion 113 preferably suitable to facilitate screwing the seat 50 to the delivery pipe 28.

. In figures 17 and subsequent ones, there is also illustrated a possible embodiment in which the lid 54 extends below the bottom of the seat 50 with an annular portion 84 being suitable to externally enclose an end portion of the delivery pipe 28. In accordance with a possible embodiment, there is provided the guide and immobilizing ring 86 being inserted below the seat 50, between the seat and the delivery pipe. In accordance with an embodiment different from those described above, the guide and immobilizing ring 86 comprises three teeth 87 suitable to be inserted in the groove 87a of the valve body, more precisely of the annular portion 84, by means of the respective passages 87b.

. In accordance with a possible embodiment, for example detailed in figure 30 and not described above, the passage 87b is connected to the groove 87a by means of an inclined plane 114. According to a possible embodiment, such as illustrated in figure 30, the groove 87a comprises at least one end-of-stroke 116 against which a tooth 87 stops.

. Generally speaking, also in the embodiment illustrated in figures 17 and subsequent ones, the valve body 42 where the plug 44 is housed is removably mounted on the delivery pipe 28 such as described above. In other words, the lid 54 comprises a bayonet connection to the delivery pipe. This bayonet connection is provided by means of the coupling of the groove 87a with the teeth 87.

. In accordance with a possible embodiment, the conduit 56 extends laterally from the valve body, in communication with the chamber 45 by means of the opening 57 being formed laterally to the chamber, for example in the side wall of the lid 54. Preferably, the opening 57 is formed substantially flush with the inlet 46.

. With reference to the plug 44, figures 17 and the subsequent ones illustrate a possible further embodiment in which said plug 44 comprises a first portion 44a and a second portion 44b being associated to each other such as to allow a relative movement between both portions. The first portion 44a moves relative to the second portion 44b.

. In accordance with a possible embodiment, the second portion 44b is hollow and houses the first portion 44a therein. Preferably, the second portion 44b comprises the rod 100 widening in a head 118 being arranged within the valve body 42.

. According to a possible embodiment, the first portion 44a is coaxially inserted in the second portion 44b along the direction of movement of the plug 44. Preferably, the first portion 44a slides relative to the second portion 44b along the direction of movement of the plug 44.

. According to a possible embodiment, the first portion 44a comprises a rod 120 and a widened head 122. Preferably, the rod 120 is slidingly housed within the second portion 44, preferably of the relative rod 110 if provided, and the widened head 122 is suitable to abut against the head 118 of the second portion 44b.

. In accordance with a possible embodiment, the plug 44 comprises the seal 64, advantageously mounted on the first portion 44a.

. According to a possible embodiment there are provided end of stroke means 124 between the first portion 44a and the second portion 44b suitable to prevent that the first portion may detach from the second portion. In the embodiment illustrated in figures 17-32, the end of stroke means are provided by an annular widening 126a and 126b of the first and second portion being suitable to prevent that the first portion may be removed from the second portion.

. Advantageously the second portion 44b is connected to the portion having the shape of a plunger 66 for the direct action by the operator on the plug 44. Preferably, the portion 66 extending outside the valve body 42 has a weight calibrated to set the pressure of the boiler 12 to a value suitable to raise the plug 44.

. In accordance with a possible embodiment, the valve means comprise to avoid sucking back the beverage along the delivery path to the boiler. Advantageously, the plug 44 is shaped such that it can be recalled by the depression that may be generated within the boiler to close the inlet 46.

. Advantageously, the means preventing the sucking back of the beverage along the delivery path to the boiler comprise the plug 44, preferably provided in first and second portions such as described above.

. In accordance with a further possible embodiment, the equipment according to the present invention comprises means for centering the plug 44 on inlet 46. These means are advantageously provided by the seat 50 and particularly by the configuration of a defining surface 128 surrounding the inlet 46.

. Advantageously, the defining surface 128 is either concave or inclined towards the inlet between an outer edge 128a more proximate to the plug 44 and an inner edge 128b less proximate to the plug 44 (figure 32 and 33). The inclination of the defining surface is preferably of a few degrees (the inclination has been magnified in figures 32 and 33 for illustration purposes). The presence of the outer edge 128a more proximate to the plug 44 defines a first contact edge allowing to align the plug in the event that the direction in which the plug moves is not aligned with the direction of the delivery pipe path. This effect is even more advantageous when the plug is made of two parts, because the first portion 44a can be easily guided relative to the second portion 44b.

. With reference to the operation of this embodiment, either the plug or the first portion thereof moving from the open to the closed portions first encounters the outer edge 128a thereby getting aligned with the delivery pipe. The further downward movement of the plug or the first portion closes the inlet 46 and the seal 64 deforms towards the inside of the defining surface 128 (figure 33).

. Preferably, the defining surface 128 is set higher than a peripheral surface 130 of the seat 50, preferably having the shape of a nozzle defining the inlet 46.

. In accordance with a different embodiment, for example illustrated in figure 31, the defining surface 128 surrounding the inlet 46 is either concave or inclined towards the inlet between an outer edge 128a less proximate to the plug 44 and an inner edge 128b more proximate to the plug 44. Preferably, an annular rib is also provided that surrounds the defining surface 128 such that the plug 44 (or the first portion 44a) first touches the inner edge 128b of the defining surface 128 and the annular rib 132 during the downward movement thereof to close the inlet 46 (the inclination angles have been magnified in figure 31 for illustration purposes).

. In accordance with a possible embodiment, such as illustrated in figures 25 and 26, the portion 66 extending outside the valve body 42 advantageously comprises a notch 134 suitable to surround an upper portion of the valve body when the plug 44 is in the closed position.

. The operation of an equipment according to the present invention is described below, with reference to an embodiment such as illustrated in figure 17 and subsequent ones.

. The arrangement of the equipment to prepare cappuccino is similar to that described above. The seat 50 is screwed on the delivery pipe 28 and the valve body 42 is immobilised on the seat 50 and the delivery pipe by means of the bayonet connection described above (by inserting the teeth 87 in the respective passages 87b until reaching the groove 87a and turning the valve body 42 until one of the teeth reaches the end of stroke 116). The boiler 12 contains a given amount of water, the container 18 contains a given amount of coffee and the and the collection container 14 contains a given amount of milk. The valve means 40 are arranged with the plug 44 being in the closed position (lowered position). The boiler 12 is placed on a heat source for the temperature and pressure therein to increase up to the value at which the plug will be moved from the closed position to the open position (raised position).

. Figures 25 and 26 illustrate the valve means in the closed position of inlet 46. In the event the plug is divided in two portions, the first and second portions of the plug are both in the lowered position and the portion 66 defines the calibrated weight that the pressure inside the boiler must overcome for the delivery path to be opened.

. When this pressure has been reached, the plug is pushed from the closed position to the open position, such as illustrated in figures 27 or 28. In case the plug is divided in two portions, the first and second portions of the plug are both pushed to the raised position.

. The means for generating friction, and particularly the annular element 102 interfere with the wall of the sliding seat 98, at least at an end length of the plug stroke. These means are advantageously shaped such as to stop the plug in the open position (figures 27 and 28).

. The water contained in the boiler passes through the layer of powdered coffee and quickly flows through the delivery pipe 28, thereby filling the chamber 45 and flowing out through conduit 56 and nozzle 88, if provided. Because the plug is immobilized in the open position, the delivery path remains open also when the water contained in the boiler decreases and turns prevalently to steam rising beneath the level of the beverage contained in the collection container. The high speed of water exiting the boiler and the delivery of steam contribute to generate a turbulence in the milk leading to an intimate diffusion of steam and air particles therein, such as to create the cappuccino typical foam.

. When the delivery has been completed, the heat source is normally switched off (either automatically or manually), whereby the equipment cools down with a consequent decrease in the temperature and pressure within the boiler. The valve means 40 are made such that the pressure decrease within the boiler recalls the plug 44, and particularly the first portion 44a if provided, before the beverage flows back to the conduit 56 by passing through the nozzle 88 (figure 29).

. In order to clean the equipment, it is sufficient to unlock the lid 54 and also the seat 50, if desired.

. To produce another cappuccino, the plug 44, or only the second portion 44b thereof has to be lowered again, and the ingredients have to be restored, such as described above.

. The equipment according to the present embodiment allows to obtain the beverages already described above with reference to the preceding embodiments. Particularly, this equipment is suitable to implement the methods for producing beverages such as described above and below, with the further peculiarity that the means for immobilizing the plug act by means of friction between the plug and a portion of the fixed equipment relative to the movement of the plug.

. In accordance with a further embodiment, independently from the direction of movement of the plug, the means for immobilizing the plug 44 comprise means for generating friction along at least one portion of the stroke of the plug 44 relative to a portion of the fixed equipment relative to the movement of the plug 44 to immobilize the plug in the open position.

. With reference to the embodiments for example illustrated in figures 17 and subsequent ones, a number of variants are possible though still remaining within the scope of the present invention. Several example of variants will be described below by way of non-limiting examples.

. By way of example, the plug immobilizing means comprising means for generating friction can be used in any configuration of valve means, for example those described or illustrated above.

. The shape of the valve body and conduit 56 can be different from that described and illustrated or it can be applied to different valve means, for example those described or illustrated above. For example, the grip overhangs 110 or the overhang 108 may be of a different shape, size, number from what has been illustrated or described, they may not be provided or may be implemented in any other type of valve means.

. The seat 50 can take any shape and size and can be made such as illustrated in figure 27 or such as illustrated in figure 31 or in figures 32 and 33. Furthermore, the seat such as illustrated in figure 31 or in figures 32 and 33 can be used in any type of valve means. The locking between the seat, the lid and the delivery pipe may be different from what has been described or illustrated. For example, the lid 54 can be either directly locked on the delivery pipe or screwed on the seat 50.

. The bayonet connection can be of a different shape, size, number of teeth from what has been described or illustrated. Furthermore, the bayonet connection illustrated in figures 17-33, and particularly that in figure 30, can be used in any type of valve means.

. The provision of a plug with two portions can be implemented in any type of valve means, even independently from the existence of means for preventing sucking back, for example to facilitate centering the plug on inlet 46.

. The nozzle 88 and the mounting thereof on conduit 56 may be different from what has been described or illustrated. For example, the nozzle 88 can be made as one piece with the conduit. Furthermore, the embodiment illustrated can be applied to any type of valve means.

. The portion 66 may be different from what has been described or illustrated. Furthermore, the embodiment such as illustrated in figures 27 and 28 can be used in any type of valve means.

. The possible embodiments described above can be implemented independently from the others, and the reference drawings are a non-limiting exemplary embodiment.

. Notwithstanding the embodiments illustrated, which constitute possible embodiments, the means for immobilising the plug may advantageously be arranged in such a way that they can be activated and deactivated by an action exerted in the direction of movement of the plug. In other words the plug is immobilised in or released from the position in which the delivery pipe is open through a force which is exerted along the direction of motion of the plug.

. In addition to this, regardless of the embodiment, the means for immobilising the plug may be arranged in such a way that they can be deactivated by applying a force directly to the plug sufficient to return it to the closed position.

. In accordance with a general aspect regardless of the direction of activation or deactivation, the means for immobilising the plug in the open position are advantageously located substantially within the valve body in order to prevent contamination with the components of the beverage, in particular milk. In particular a first portion of the said immobilising means is associated with the plug while a second portion of the said immobilising means is associated with a portion which is fixed, for example to the valve body or preferably to a cap of the said valve body or to the equipment itself.

. In general terms the means for immobilising the plug in the open position may be activated and/or deactivated through the lid of the coffee-maker, that is even when the lid is closed.

. In general terms this invention may relate to a method for making cappuccino using a coffee-maker or moka comprising a boiler, a container for ground coffee and a collection container. This method comprises the stages of:

. Providing the coffee-maker with a quantity of water in the boiler, a quantity of ground coffee in the container for ground coffee and a quantity of milk in the collection container of the coffee-maker,

. Heating the boiler to a predetermined excess pressure with respect to atmospheric pressure in which a plug located along a delivery path for the coffee infusion from the boiler to the collection container opens the said delivery path,

. Immobilising the said plug in the position in which the delivery pipe is open until all the coffee infusion and steam present in the boiler have been delivered,

. In which the said plug is immobilised in or released from the said position in which the delivery pipe is open through a force which is exerted in the direction of movement of the plug.

. In general terms this invention may also relate to a method for foaming milk using a coffee-maker comprising a boiler and a collection container, the said method comprising the stages of:

. Providing the coffee-maker with a predetermined quantity of water in the boiler and a quantity of milk in the coffee-maker's collection container,

. Heating the boiler to a predetermined excess pressure with respect to atmospheric pressure in which a plug located along a delivery path for water from the boiler to the collection container opens the said delivery path,

. Immobilising the said plug in the position in which the delivery pipe is open until all the water and steam present in the boiler have been delivered,

. In which the said plug is immobilised in or released from the said position in which the delivery pipe is open through an action exerted along the direction of movement of the plug.

. In accordance with a possible embodiment this invention may also relate to a method for selectively obtaining a coffee infusion with or without foam through a coffee-maker comprising a boiler, a container for powdered coffee, and a collection container for the coffee infusion.

. This method comprises the stages of:

. Providing the coffee-maker with a quantity of water in the boiler and a quantity of ground coffee in the container for ground coffee,

. Setting the position of a plug located along a delivery path for the water from the boiler to the collection container between a position in which the delivery path is open and one in which it is closed, in which the plug can be immobilised in or released from the open position of the delivery pipe by means of a force exerted in the direction of movement of the plug,

. Heating the boiler to a predetermined excess pressure with respect to atmospheric pressure to deliver a coffee infusion with or without foam depending upon the set position of the plug.

. Further variants are possible with reference to any embodiment described.

. For example the valve means may be attached to the delivery pipe in a different way. Other immobilising means of a snap or interlocking or other form may be provided.

. In addition the valve means may comprise the plug alone mounted floating on the delivery pipe as for example provided in patent EP 932355 incorporated herein for reference in connection with the mounting of the plug on the delivery pipe. In this case the pair of members capable of attracting/repelling each other through magnetic force may be provided between the plug and the lid of the equipment or the delivery pipe.

. In accordance with a possible embodiment opening 36 in lid 32 may be provided with a closure which is for example flexible and/or transparent through which it is possible to act on portion 66 of the plug, but which prevents any escape of liquid. Preferably the dimensions of opening 36 make it possible to open the lid of the equipment without dismantling the plug or portion 66 thereof.

. The lid may possibly be of the conventional type, without an opening, with space being provided within the container for movement of the valve means.

. All the embodiments in which a conduit 56 is provided to provide the outlet 48 from the valve means, this conduit may be made of one piece with the valve body or may be mounted on the same in various configurations. Also in the embodiments in Figures 10-16 conduit 56 may be constructed as specified in Figure 1a.

. Advantageously the means for preventing sucking back may have embodiments other than those illustrated. For example vent means provided with a capillary opening in the valve body or the lid of the valve body instead of in conduit 56 may be provided. In addition to this the vent means may be used in any type of valve means, for example with the plug mounted floatingly in the delivery pipe or with means for immobilising the plug which are different from those described previously.

. The equipment used may be suitable for location on an external source of heat or may be provided with electrical resistances which can be activated by means of a switch or base plate.

. In accordance with one embodiment this invention relates to valve means for equipment for the preparation of a hot beverage, for example comprising at least one first liquid component and one second preferably liquid component which is miscible with the said first component.

. In particular the valve means are capable of being located along the delivery path of the equipment and comprise a plug which can move between a position in which the delivery path is closed and one in which it is open depending upon the pressure within the boiler, and means for immobilising the plug in the open position. Advantageously the means for immobilising the plug comprise at least one pair of members which are capable of attracting/repelling each other through magnetic force. In accordance with a further embodiment the means for immobilising the plug are arranged in such a way that they can be activated and deactivated by a force exerted along the direction of movement of the plug.

. It will be appreciated from the above that provision of equipment or valve means according to this invention makes it possible to achieve greater versatility in use and particularly satisfying beverages.

. The presence of the valve means makes it possible, if activated, to raise the temperature and pressure conditions at the time of delivery and thus the rate of delivery. In addition, by immobilising the plug in the open position while in operation it is possible to make use of delivery of all the steam in the boiler to create turbulence sufficient to cause the beverage to foam, in particular when based on milk.

. The ease of manufacture and operation makes it possible to provide a very versatile coffee-maker in which the means for immobilising the plug in the open position can be activated automatically by movement of the plug during operation or directly by the user in order to set the operating mode of the coffee-maker at the outset.

. All the components of the valve means may be dismantled and cleaned, having regard to use with liquids such as milk which, as is well known, creates problems with deposits and encrustations.

. The advantageous provision of operation in a direction of movement of the plug makes it possible to simplify the structure appreciably and render operation intuitive. The fact that the position of the plug is visible, and makes it possible to set the initial conditions of the valve means, and therefore the type of operation desired, is particularly advantageous.

. Of the embodiments described the provision of magnetic members (or members capable of exerting a magnetic force) is particularly advantageous in that this is reliable, rapidly activatable and deactivatable and is not compromised by the presence of any residues.

. Where emptying of the collection container is delayed, it is possible to prevent the beverage from being undesirably sucked back into the boiler. In fact cooling of the boiler results in a fall in pressure within it which can cause the beverage to be sucked back along the delivery path. This sucking back is particularly undesirable in the case of beverages based on milk which would produce residues and encrustations which are difficult to remove along the delivery path and in the boiler.

. With reference to the exemplary embodiment illustrated in figures 17 and subsequent ones, the provision of means for generating friction between the plug and a portion of the fixed equipment relative to the movement of the plug is particularly advantageous. These means operate along at least one length of the stroke of the plug until the plug is stopped in the open position. Consequently, their action is gradual and operates continuously along a stroke length of the plug. Furthermore, their action is uniform because they are evenly distributed along the circumpherence of the plug or the rod thereof, if provided.

. The embodiment in two portions of the plug allows to prevent that the beverage may be sucked back into the boiler and/or facilitate centering the plug on seat 50. This embodiment is simple and efficient and avoids having to provide capillary openings that may be subjected to incrustations and clogging.

. The particular provision of a removable valve body allows to obtain an optimum cleaning of the equipment. The provision of a bayonet connection facilitates assembly, and prevents stick-slips due to the presence of the inclined plane. The provision of an end of stroke allows to accurately define the immobilizing position. The fact of providing a removable lid 54 relative to seat 50 and/or delivery pipe it is further particularly advantageous, such that even only the lid can be dismounted. However, the overhang 108 defines a further safety element in that it prevents that the valve means may be ejected in case they are not properly locked to the delivery pipe.

. Naturally, the principle of the invention remaining the same, the forms of embodiment and details of construction may be varied widely with respect to those described and illustrated, which have been given purely by way of example, without thereby departing from the scope of the invention as defined in the claims.

## Claims

1. Equipment (10) for the preparation of a hot beverage, comprising a boiler (12) designed to contain a liquid component of the said beverage, a collection container (14) and means (22, 20, 28) for defining a delivery path for the said liquid component from the boiler to the collection container,
the said equipment also comprising valve means (40) located along the delivery path for the said liquid component comprising a plug (44) which can move between a position in which the delivery path is closed and one in which it is open and means (70, 72; 74, 76; 78) to immobilise the plug in the open position,
**characterized in that** said means for immobilising the plug (44) comprise means for generating friction along at least one portion of the stroke of plug (44) relative to a portion of equipment (10) being fixed relative to the movement of plug (44) to immobilise the plug in the open position.

2. Equipment for the preparation of a hot beverage according to claim 1, in which the said means to immobilise the plug are arranged in such a way that they can be activated and deactivated by a force exerted along the direction of movement of the plug.

3. Equipment for the preparation of a hot beverage according to claim 2, in which the said means can be activated by movement of the plug between the closed position and the open position.

4. Equipment for the preparation of a hot beverage according to claim 2 or 3, in which the said plug can move in a direction coinciding with the direction of the force of gravity.

5. Equipment for the preparation of a hot beverage according to claim 2, wherein said means for generating friction are interposed between the plug (44) and a valve body of said valve means (42).

6. Equipment for the preparation of a hot beverage according to claim 5, wherein said means for generating friction are suitable to be interposed between the plug (44) and a sliding seat (98) of said valve body (42) inside which said plug (44) is moved.

7. Equipment for the preparation of a hot beverage according to claim 6, wherein said means for generating friction enclose a rod (100) of said plug (44) being housed in said sliding seat (98) and are suitable to generate friction against the walls of said sliding seat (98).

8. Equipment for the preparation of a hot beverage according to claim 7, wherein said means for generating friction moves with the plug (44).

9. Equipment for the preparation of a hot beverage according to claim 2 or to one of claims 5 to 8, wherein said means for generating friction comprise an annular element (102).

10. Equipment for the preparation of a hot beverage according to claim 9, wherein said annular element (102) is housed on the plug (44) and is suitable to generate friction against the walls of a sliding seat (98) of a valve body (42) housing said plug (44).

11. Equipment for the preparation of a hot beverage according to claim 10, wherein said annular element (102) is housed in an annular groove (104) of the plug (44), protruding therefrom to interfere with the walls of the sliding seat (98).

12. Equipment for the preparation of a hot beverage according to one of claims 9 to 11, wherein said annular element (102) is arranged such as to generate friction in an end length of the stroke of the plug between the closed position and the open position.

13. Equipment for the preparation of a hot beverage according to one of claims 9 to 12, wherein said annular element (102) is made by means of a seal or O-ring.

14. Equipment for the preparation of a hot beverage according to one of claims 2-13, in which the said delivery path is at least partly defined by a delivery pipe (28) which opens into the said collection container (14) and in which the said valve means (40) are located at the outlet of the said delivery pipe (28).

15. Equipment for the preparation of a hot beverage according to claim 14, in which the said delivery pipe (28) extends at least partly within the collection container (14) along an axis (X) and in which the said valve means (40) are located at the outlet of the said delivery pipe (28) in the prolongation of the said axis (X).

16. Equipment for the preparation of a hot beverage according to claim 15, in which the said plug (44) can move along the said axis (X).

17. Equipment for the preparation of a hot beverage according to one of claims 14 to 16, in which the said valve means (40) comprise a valve body (42) which houses the plug (40) provided with an inlet (46) capable of being placed in communication with the outlet of the delivery pipe (28) and an outlet (48) capable of being placed in communication with the said collection container (14).

18. Equipment for the preparation of a hot beverage according to claim 17, in which the said immobilising means are within the said valve body (42).

19. Equipment for the preparation of a hot beverage according to claim 18, in which a first portion of the said immobilising means is associated with the said plug (44).

20. Equipment for the preparation of a hot beverage according to claim 19, in which a second portion of the said immobilising means is associated with a fixed portion of the said equipment.

21. Equipment for the preparation of a hot beverage according to claim 20, in which a second portion of the said immobilising means is associated with the said valve body (42).

22. Equipment for the preparation of a hot beverage according to claim 21, in which a second portion of the said immobilising means is associated with a lid (54) of the said valve body (42).

23. Equipment for the preparation of a hot beverage according to one of claims 17 to 22, in which the said inlet (46) of the valve body (42) is along the same axis as the said delivery path (28).

24. Equipment for the preparation of a hot beverage according to claim 23, in which the said outlet (48) from the valve body (42) is located laterally at the inlet (46) with respect to the said axis (X) of the delivery valve (28).

25. Equipment for the preparation of a hot beverage according to one of claims 17 to 24, in which the said delivery pipe (28) has an extension within the collection container (14) such as to keep the inlet (46) of the valve body (42) above the surface of the hot beverage present in the collection container (14).

26. Equipment for the preparation of a hot beverage according to claim 25, in which the outlet (48) from the said valve body (42) is located at a level lower than the inlet (46) of the said valve body (42).

27. Equipment for the preparation of a hot beverage according to claim 26, in which the said valve body (42) comprises at least one conduit (56) having a free end defining the said outlet (48) from the valve body (42).

28. Equipment for the preparation of a hot beverage according to claim 27, in which the said conduit (56) extends downwards from a bottom of the said valve body (42).

29. Equipment for the preparation of a hot beverage according to claim 28, in which the entire extent of the said conduit (56) is located below the said inlet (46) of the valve body (42).

30. Equipment for the preparation of a hot beverage according to claim 27, in which the said conduit (56) extends laterally with respect to the valve body (42).

31. Equipment for the preparation of a hot beverage according to one of claims 27 to 30, in which the said conduit (56) is mounted in a movable way on the valve body (42).

32. Equipment for the preparation of a hot beverage according to one of claims 27 to 30, in which the said conduit (56) is of one piece with the valve body (42).

33. Equipment for the preparation of a hot beverage according to one of claims 27 to 30, wherein said conduit (56) is partially made as one piece with the valve body (42), a closing portion (106) of said conduit (56) being applied on the valve body (42).

34. Equipment for the preparation of a hot beverage according to one of claims 27 to 33, wherein said conduit (56) comprises an overhang (108) extending transversally thereto and the valve body (42).

35. Equipment for the preparation of a hot beverage according to one of claims 27 to 34, in which the said conduit (56) is straight.

36. Equipment for the preparation of a hot beverage according to one of claims 27 to 35, in which the said conduit (56) has a terminal portion (58) which is inclined with respect to an attachment portion (60) between the said conduit (56) and the valve body (42).

37. Equipment for the preparation of a hot beverage according to one of claims 27 to 36, in which the said at least one conduit (56) comprises at least one portion (58) parallel to the said axis (X) of the delivery pipe (28).

38. Equipment for the preparation of a hot beverage according to claim 37, in which the said conduit (56) comprises a terminal portion (58) which is inclined with respect to the direction of the said axis (X).

39. Equipment for the preparation of a hot beverage according to claim 38, in which the said terminal portion (58) of the said conduit (56) is inclined in a direction tangential to a circumference centered on the said axis (X).

40. Equipment for the preparation of a hot beverage according to one of claims 27 to 39, in which the said conduit comprises a nozzle (88) located at the outlet (48) and defining a passage cross-section which is less than the passage cross-section of the conduit (56).

41. Equipment for the preparation of a hot beverage according to claim 40, wherein said nozzle (88) is a separate element from said conduit (56) and is suitable to be inserted in a widened seat (90) of the conduit.

42. Equipment for the preparation of a hot beverage according to claim 41, wherein said nozzle (88) protrudes below the conduit (56).

43. Equipment for the preparation of a hot beverage according to one of claims 40 to 42, wherein said conduit (56) comprises a lower wall (92) being inclined relative to the path of the delivery pipe (28) such that also nozzle (88) is inclined relative to the path direction of the delivery pipe (28).

44. Equipment for the preparation of a hot beverage according to one of claims 17 to 43, wherein said valve body (42) comprises at least one grip overhang (110) extending transversally to the valve body to facilitate the positioning of the valve means (40) on the delivery pipe (28).

45. Equipment for the preparation of a hot beverage according to claim 44, wherein said grip overhang (110) is shaped as a flap extending in the radial direction relative to the path of the valve body (42).

46. Equipment for the preparation of a hot beverage according to claim 44 or 45, wherein said valve body (42) comprises two grip overhangs (110) that are angularly offset along the outer wall of the valve body (42).

47. Equipment for the preparation of a hot beverage according to one of claims 17 to 46, in which the said valve body (42) in which the plug (44) is housed is movably mounted on the delivery pipe (28).

48. Equipment for the preparation of a hot beverage according to claim 47, in which a seat (50) of the valve body (42) is removably mounted on the delivery pipe (28) and a cap (54) is movably mounted on the said seat (50).

49. Equipment for the preparation of a hot beverage according to claim 48, wherein said seat (50) of the valve body (42) defines a nozzle communicating with said delivery pipe (28).

50. Equipment for the preparation of a hot beverage according to claim 48 or 49, in which the said cap (54) comprises a bayonet connection with the said delivery pipe.

51. Equipment for the preparation of a hot beverage according to claim 50, in which the said bayonet connection is provided between the said delivery pipe (28) and an annular portion (84) of the said cap (54) which is designed to enclose externally an end portion of the delivery pipe (28).

52. Equipment for the preparation of a hot beverage according to claim 50 or 51, in which the said bayonet connection comprises a groove (87a) in the said cap (54) which is capable of receiving a tooth (87) via a passage (87b), the said tooth being of one piece with the delivery pipe (28).

53. Equipment for the preparation of a hot beverage according to claim 52, in which the said bayonet connection comprises a guide and immobilising ring (86) inserted between the seat (50) and the delivery pipe (28), the said guide and immobilising ring (86) comprising the said tooth (87).

54. Equipment for the preparation of a hot beverage according to claim 52 or 53, wherein said passage (87b) is connected to groove (87a) by means of an inclined plane (114).

55. Equipment for the preparation of a hot beverage according to one of claims 52 to 54, wherein said groove (87a) comprises at least one end of stroke (116) against which at least one tooth (87) is abutted.

56. Equipment for the preparation of a hot beverage according to one of claims 17 to 55, wherein said valve body (42) comprises an overhang (108) extending transversally thereto.

57. Equipment for the preparation of a hot beverage according to one of claims 2-56, wherein said valve means comprise means for preventing sucking back of the beverage into the boiler.

58. Equipment for the preparation of a hot beverage according to claim 57 when depending on one of claims 17 to 56, in which the said valve body (42) comprise means to prevent the beverage from being sucked back into the boiler.

59. Equipment for the preparation of a hot beverage according to claim 58, in which the said means to prevent the beverage from being sucked back into the boiler comprise vent means.

60. Equipment for the preparation of a hot beverage according to claim 59, in which the said vent means comprise a capillary opening (62).

61. Equipment for the preparation of a hot beverage according to claim 60, when dependent on one of claims 27 to 56, in which the said capillary opening (62) is made in the same conduit (56) at a level such as will remain above the level of the hot beverage present in the collection container (14).

62. Equipment for the preparation of a hot beverage according to claim 57, wherein said means for preventing the sucking back comprise said plug (44) suitable to be recalled in the closed position following the pressure decrease within the boiler (12).

63. Equipment for the preparation of a hot beverage according to claim 62, wherein said plug (44) comprises a first portion (44a) and a second portion (44b) being associated to each other such as to allow a relative movement between both portions, said first portion (44a) moving relative to said second portion (44b), which is immobilised in the closed position, due to the pressure decrease within the boiler (12).

64. Equipment for the preparation of a hot beverage according to claim 63, wherein said second portion (44b) is hollow and internally houses said first portion (44a).

65. Equipment for the preparation of a hot beverage according to claim 63 or 64, wherein said first portion (44a) is coaxially inserted in said second portion (44b) along the direction of movement of said plug (44).

66. Equipment for the preparation of a hot beverage according to claim 65, wherein said first portion (44a) slides relative to said second portion (44b) along said direction of movement of said plug.

67. Equipment for the preparation of a hot beverage according to one of claims 64 to 66, wherein there are provided end of stroke means (124) between said first portion (44a) and said second portion (44b) that are suitable to prevent that the first portion (44a) may be detached from the second portion (44b).

68. Equipment for the preparation of a hot beverage according to one of claims 63 to 67, wherein said first portion comprises a seal (64).

69. Equipment for the preparation of a hot beverage according to one of claims 62 to 68, wherein said second portion (44b) is connected to a portion having the form of a plunger (66) for direct action by the operator on the plug (44).

70. Equipment for the preparation of a hot beverage according to one of claims 2-69, in which the said means for immobilising the plug are arranged in such a way that they can be deactivated by exerting a force directly on the said plug such as to return it to the closed position.

71. Equipment for the preparation of a hot beverage according to one of claims 2-70, in which the said valve means (40) comprise a valve body (42) in which is housed the plug (44) provided with an inlet (46) capable of being placed in communication with the outlet of the said delivery path and an outlet (48) which is capable of being placed in communication with the said collection container (14) and in which the said plug (44) comprises a portion (66) which extends outside the valve body (42).

72. Equipment for the preparation of a hot beverage according to claim 71, in which the said portion (66) which extends outside the valve body (42) is in the form of a plunger.

73. Equipment for the preparation of a hot beverage according to claim 71 or 72, in which the said portion (66) extending outside the valve body (42) has a portion having dimensions greater than the dimension of an opening (68) of the said valve body (42) through which the said plug (44) extends.

74. Equipment for the preparation of a hot beverage according to one of claims 71 to 73, in which the said portion (66) extending outside the valve body (42) is mounted on the said plug (44) through an opening (68) in the said valve body (42).

75. Equipment for the preparation of a hot beverage according to claim 74, in which the said portion (66) which extends outside the valve body (42) is threaded onto the said plug (44).

76. Equipment for the preparation of a hot beverage according to one of claims 71 to 75, wherein said portion (66) extending outside the valve body (42) has a weight being calibrated to set the pressure in the boiler (12) to a value suitable to raise said plug (44).

77. Equipment for the preparation of a hot beverage according to one of claims 2-76, comprising a lid (32) hinged to the collection container (14) and provided with an opening (36) capable of receiving a portion (66) of the said plug (44).

78. Equipment for the preparation of a hot beverage according to claim 77 when dependent upon one of claims 71 to 76, in which the said opening (36) is capable of receiving a portion (66) of the said plug (44) extending outside the valve body (42).

79. Equipment for the preparation of a hot beverage according to claim 77 or 78, in which the said opening (36) is central to the lid (32) and coaxial with a delivery pipe (28) defining a portion of the said delivery path.

80. Equipment for the preparation of a hot beverage according to one of claims 77 to 79, in which the said lid (32) comprises a graspable member (38) located in an off-center position on the lid.

81. Equipment for the preparation of a hot beverage according to claim 80, in which the said graspable member (38) is located between the said opening (36) and a handle (34) of the said equipment.

82. Equipment for the preparation of a hot beverage according to claim 81, in which the said graspable member (38) is located on a projecting portion (33) of the lid (32).

83. Equipment for the preparation of a hot beverage according to one of claims 2-82, wherein there are provided means for centering the plug (44) on inlet (46).

84. Equipment for the preparation of a hot beverage according to claim 83, wherein said means for centering the plug (44) comprise a defining surface (128) surrounding said inlet (46), said defining surface (128) being concave or inclined towards the inlet between an outer edge (128a) being more proximate to the plug (44) and an inner edge (128b) being less proximate relative to the plug (44).

85. Equipment for the preparation of a hot beverage according to claim 84, wherein said defining surface (128) is raised relative to a peripheral surface (130) of a nozzle (50) defining said inlet (46).

86. Equipment for the preparation of a hot beverage according to claim 83, wherein said means for centering the plug (44) comprise a defining surface (128) surrounding said inlet (46), said defining surface (128) being concave or inclined towards the inlet between an outer edge (128a) being less proximate relative to the plug (44) and an inner edge (128b) being more proximate to the plug (44).

87. Equipment for the preparation of a hot beverage according to claim 86, wherein said means for centering further comprise an annular rib (132) surrounding the defining surface, and wherein the plug (44) is suitable to contact said inner edge (128b) and said annular rib (132).

88. Equipment for the preparation of a hot beverage according to one of claims 2 to 56, wherein said plug (44) comprises a first portion (44a) and a second portion (44b) being associated to each other such as to allow a relative movement between both portions, said first portion (44a) moving relative to said second portion (44b).

89. Equipment for the preparation of a hot beverage according to claim 88, wherein said second portion (44b) is hollow and houses said first portion (44a) therein.

90. Equipment for the preparation of a hot beverage according to claim 88 or 89, wherein said first portion (44a) is coaxially inserted into said second portion (44b) along the direction of movement of said plug (44).

91. Equipment for the preparation of a hot beverage according to claim 90, wherein said first portion (44a) slides relative to said second portion (44b) along said direction of movement of said plug.

92. Equipment for the preparation of a hot beverage according to one of claims 88 to 91, wherein there are provided end of stroke means (124) between said first portion (44a) and said second portion (44b) suitable to prevent that the first portion (44a) may be detached from the second portion (44b).

93. Equipment for the preparation of a hot beverage according to one of claims 88 to 92, wherein said first portion (44a) comprises a seal (64).

94. Equipment for the preparation of a hot beverage according to one of claims 88 to 93, wherein said second portion (44b) is connected to a portion having the form of a plunger (66) for direct action by the operator on plug (44).

95. Valve means (40) capable of being used in equipment (10) for the preparation of a hot beverage in accordance with one of claims 1 to 94, said valve means being able to be located along the delivery path and comprising a plug (44) which can move between a position in which the delivery path is closed and one in which it is open and means to immobilise the plug in the open position comprising means for generating friction along at least one portion of the stroke of plug (44) relative to a portion of equipment being fixed relative to the movement of plug (44) to immobilise the plug in the open position.

96. Method for preparing a hot beverage comprising at least one first liquid component using a coffee-maker (10) comprising a boiler (12) and a collection container (14), said method comprising the steps of:
arranging the coffee-maker with an amount of said first liquid component in the boiler (12),
heating the boiler (12) up to a preset overpressure relative to the atmospheric pressure at which a plug (44) being arranged along a delivery path of the first liquid component from the boiler to the collection container opens said delivery path,
immobilising said plug in the open position of the delivery path until the first liquid component and the steam contained within the boiler have been completely delivered,
wherein said plug (44) is either immobilised to or released from said open position of the delivery path by means of friction being generated between the plug (44) and a portion of the equipment (10) being fixed relative to the movement of the plug, said friction being suitable to maintain the plug (44) in the open position.

## Patentansprüche

1. Gerät (10) für die Zubereitung eines heißen Getränks, umfassend einen Boiler (12), der dafür ausgestaltet ist, eine Flüssigkomponente des Getränks aufzunehmen, einen Sammelbehälter (14) und Mittel (22, 20, 28) zum Definieren eines Abgabepfades für die Flüssigkomponente von dem Boiler zu dem Sammelbehälter,
wobei das Gerät auch Ventilmittel (40) umfasst, die entlang des Abgabepfades für die Flüssigkomponente angeordnet sind, umfassend einen Verschluss (44), der sich zwischen einer Position, in der der Abgabepfad geschlossen ist, und einer, in der er offen ist, bewegen kann, und Mittel (70, 72; 74, 76; 78) zum Immobilisieren des Verschlusses in der offenen Position,
**dadurch gekennzeichnet, dass** die Mittel zum Immobilisieren des Verschlusses (44) Mittel zum Erzeugen von Reibung entlang wenigstens eines Bereichs des Hubs des Verschlusses (44) relativ zu einem Bereich des Geräts (10) umfassen, der relativ zu der Bewegung des Verschlusses (44) fixiert ist, um den Verschluss in der offenen Position zu immobilisieren.

2. Gerät für die Zubereitung eines heißen Getränks nach Anspruch 1, in welchem die Mittel zum Immobilisieren des Verschlusses derart angeordnet sind, dass sie durch eine entlang der Bewegungsrichtung des Verschlusses ausgeübte Kraft aktiviert und deaktiviert werden können.

3. Gerät für die Zubereitung eines heißen Getränks nach Anspruch 2, in welchem die Mittel durch Bewegung des Verschlusses zwischen der offenen und der geschlossenen Position aktiviert werden können.

4. Gerät für die Zubereitung eines heißen Getränks nach Anspruch 2 oder 3, in welchem der Verschluss sich in eine Richtung bewegen kann, die mit der Richtung der Schwerkraft zusammenfällt.

5. Gerät für die Zubereitung eines heißen Getränks nach Anspruch 2, wobei die Mittel zum Erzeugen von Reibung zwischen dem Verschluss (44) und einem Ventilkörper der Ventilmittel (42) eingeführt sind.

6. Gerät für die Zubereitung eines heißen Getränks nach Anspruch 5, wobei die Mittel zum Erzeugen von Reibung geeignet sind, zwischen dem Verschluss (44) und einem gleitenden Sitz (98) des Ventilkörpers (42) eingeführt zu sein, innerhalb welchem der Verschluss (44) bewegt wird.

7. Gerät für die Zubereitung eines heißen Getränks nach Anspruch 6, wobei die Mittel zum Erzeugen von Reibung einen Stab (100) des Verschlusses (44) einschließen, der in dem gleitenden Sitz (98) beherbergt ist, und wobei die Mittel geeignet sind, Reibung gegen Wände des gleitenden Sitzes (98) zu erzeugen.

8. Gerät für die Zubereitung eines heißen Getränks nach Anspruch 7, wobei die Mittel zum Erzeugen von Reibung sich mit dem Verschluss (44) bewegen.

9. Gerät für die Zubereitung eines heißen Getränks nach Anspruch 2 oder einem der Ansprüche 5 bis 8, wobei die Mittel zum Erzeugen von Reibung ein ringförmige Element (102) umfassen.

10. Gerät für die Zubereitung eines heißen Getränks nach Anspruch 9, wobei das ringförmige Element (102) auf dem Verschluss (44) beherbergt ist und geeignet ist, Reibung gegen die Wände eines gleitenden Sitzes (98) eines den Verschluss (44) beherbergenden Ventilkörpers (42) zu erzeugen.

11. Gerät für die Zubereitung eines heißen Getränks nach Anspruch 10, wobei das ringförmige Element (102) in einer ringförmige Nut (104) des Verschlusses (44) beherbergt ist und daraus hervorsteht, um in die Wände des gleitenden Sitzes (98) einzugreifen.

12. Gerät für die Zubereitung eines heißen Getränks nach einem der Ansprüche 9 bis 11, wobei das ringförmige Element (102) derart angeordnet ist, dass es Reibung in einer Endlänge des Hubs des Verschlusses zwischen der geschlossenen und der offenen Position erzeugt.

13. Gerät für die Zubereitung eines heißen Getränks nach einem der Ansprüche 9 bis 12, wobei das ringförmige Element (102) mittels einer Dichtung oder eines O-Rings realisiert ist.

14. Gerät für die Zubereitung eines heißen Getränks nach einem der Ansprüche 2 bis 13, in welchem der Abgabepfad wenigstens teilweise durch eine Abgaberöhre (28) definiert ist, welche sich in den Sammelbehälter (14) öffnet und in welcher sich die Ventilmittel (40) an dem Auslass der Abgaberöhre (28) befinden.

15. Gerät für die Zubereitung eines heißen Getränks nach Anspruch 14, in welchem die Abgaberöhre (28) sich wenigstens teilweise innerhalb des Sammelbehälters (14) entlang einer Achse (X) erstreckt, und in welchem die Ventilmittel (40) sich an dem Auslass der Abgaberöhre (28) in der Verlängerung der Achse (X) befinden.

16. Gerät für die Zubereitung eines heißen Getränks nach Anspruch 15, in welchem der Verschluss (44) sich entlang der Achse (X) bewegen kann.

17. Gerät für die Zubereitung eines heißen Getränks nach einem der Ansprüche 14 bis 16, in welchem die Ventilmittel (40) einen Ventilkörper (42) umfassen, der den Verschluss (40) beherbergt, der mit einem Einlass (46) bereitgestellt ist, welcher in Verbindung mit dem Auslass der Abgaberöhre (28) platziert werden kann, und mit einem Auslass (48) bereitgestellt ist, welcher in Verbindung mit dem Sammelbehälter (14) platziert werden kann.

18. Gerät für die Zubereitung eines heißen Getränks nach Anspruch 17, in welchem die Immobilisierungsmittel sich innerhalb des Ventilkörpers (42) befinden.

19. Gerät für die Zubereitung eines heißen Getränks nach Anspruch 18, in welchem ein erster Bereich der Immobilisierungsmittel dem Verschluss (44) zugeordnet ist.

20. Gerät für die Zubereitung eines heißen Getränks nach Anspruch 19, in welchem ein zweiter Bereich der Immobilisierungsmittel einem fixierten Bereich dem Gerät zugeordnet ist.

21. Gerät für die Zubereitung eines heißen Getränks nach Anspruch 20, in welchem ein zweiter Bereich der Immobilisierungsmittel dem Ventilkörper (42) zugeordnet ist.

22. Gerät für die Zubereitung eines heißen Getränks nach Anspruch 21, in welchem ein zweiter Bereich der Immobilisierungsmittel einem Deckel (54) des Ventilkörpers (42) zugeordnet ist.

23. Gerät für die Zubereitung eines heißen Getränks nach einem der Ansprüche 17 bis 22, in welchem sich der Einlass (46) des Ventilkörpers (42) entlang derselben Achse befindet wie der Abgabepfad (28).

24. Gerät für die Zubereitung eines heißen Getränks nach Anspruch 23, in welchem der Auslass (48) von dem Ventilkörper (42) sich lateral an dem Einlass (46) in Bezug auf die Achse (X) der Abgaberöhre (28) befindet.

25. Gerät für die Zubereitung eines heißen Getränks nach einem der Ansprüche 17 bis 24, in welchem die Abgaberöhre (28) eine Erweiterung innerhalb des Sammelbehälters (14) aufweist, derart, dass der Einlass (46) des Ventilkörpers (42) über der Oberfläche des heißen Getränks, das sich in dem Sammelbehälter (14) befindet, gehalten wird.

26. Gerät für die Zubereitung eines heißen Getränks nach Anspruch 25, in welchem der Auslass (48) von dem Ventilkörper (42) sich auf einer Ebene unterhalb des Einlasses (46) des Ventilkörpers (42) befindet.

27. Gerät für die Zubereitung eines heißen Getränks nach Anspruch 26, in welchem der Ventilkörper (42) wenigstens eine Leitung (56) umfasst, die ein freies Ende aufweist, das den Auslass (48) von dem Ventilkörper (42) definiert.

28. Gerät für die Zubereitung eines heißen Getränks nach Anspruch 27, in welchem die Leitung (56) sich nach untern von einem Boden des Ventilkörpers (42) erstreckt.

29. Gerät für die Zubereitung eines heißen Getränks nach Anspruch 28, in welchem die gesamte Erstreckung der Leitung (56) sich unterhalb des Einlasses (46) des Ventilkörpers (42) befindet.

30. Gerät für die Zubereitung eines heißen Getränks nach Anspruch 27, in welchem die Leitung (56) sich lateral in Bezug auf den Ventilkörper (42) erstreckt.

31. Gerät für die Zubereitung eines heißen Getränks nach einem der Ansprüche 27 bis 30, in welchem die Leitung (56) auf bewegliche Weise auf dem Ventilkörper (42) angebracht ist.

32. Gerät für die Zubereitung eines heißen Getränks nach einem der Ansprüche 27 bis 30, in welchem die Leitung (56) ein Stück mit dem Ventilkörper (42) darstellt.

33. Gerät für die Zubereitung eines heißen Getränks nach einem der Ansprüche 27 bis 30, wobei die Leitung (56) teilweise aus einem Stück mit dem Ventilkörper (42) gemacht ist, wobei ein schließender Bereich (106) der Leitung (56) auf den Ventilkörper (42) angewandt wird.

34. Gerät für die Zubereitung eines heißen Getränks nach einem der Ansprüche 27 bis 33, wobei die Leitung (56) einen Überhang (108), der sich transversal dazu erstreckt, und den Ventilkörper (42) umfasst.

35. Gerät für die Zubereitung eines heißen Getränks nach einem der Ansprüche 27 bis 34, in welchem die Leitung (56) gerade ist.

36. Gerät für die Zubereitung eines heißen Getränks nach einem der Ansprüche 27 bis 35, in welchem die Leitung (56) einen Anschlussbereich (58) aufweist, der in Bezug auf einen Anhangsbereich (60) zwischen der Leitung (56) und dem Ventilkörper (42) geneigt ist.

37. Gerät für die Zubereitung eines heißen Getränks nach einem der Ansprüche 27 bis 36, in welchem die wenigstens eine Leitung (56) wenigstens einen zu der Achse (X) der Abgaberöhre (28) parallelen Bereich (58) umfasst.

38. Gerät für die Zubereitung eines heißen Getränks nach Anspruch 37, in welchem die Leitung (56) eine Anschlussbereich (58) umfasst, der in Bezug auf die Richtung der Achse (X) geneigt ist.

39. Gerät für die Zubereitung eines heißen Getränks nach Anspruch 38, in welchem der Anschlussbereich (58) der Leitung (56) in eine Richtung geneigt ist, die tangential zu einem auf der Achse (X) zentrierten Umfang ist.

40. Gerät für die Zubereitung eines heißen Getränks nach einem der Ansprüche 27 bis 39, in welchem die Leitung eine Düse (88) umfasst, die sich am Auslass (48) befindet und einen Durchflussquerschnitt definiert, der kleiner als der Durchflussquerschnitt der Leitung (56) ist.

41. Gerät für die Zubereitung eines heißen Getränks nach Anspruch 40, wobei die Düse (88) ein von der Leitung (56) separates Element ist und geeignet ist, in einen aufgeweiteten Sitz (90) der Leitung eingefügt zu werden.

42. Gerät für die Zubereitung eines heißen Getränks nach Anspruch 41, wobei die Düse (88) unter der Leitung (56) hervorsteht.

43. Gerät für die Zubereitung eines heißen Getränks nach einem der Ansprüche 40 bis 42, wobei die Leitung (56) eine niedrigere Wand (92) umfasst, die relativ zu dem Pfad der Abgaberöhre (28) derart geneigt ist, dass auch die Düse relativ zu der Pfadrichtung der Abgaberöhre (28) geneigt ist.

44. Gerät für die Zubereitung eines heißen Getränks nach einem der Ansprüche 17 bis 43, wobei der Ventilkörper (42) wenigstens einen Griffüberhang (110) umfasst, der sich transversal zu dem Ventilkörper erstreckt, um die Positionierung der Ventilmittel (40) auf der Abgaberöhre (28) zu ermöglichen.

45. Gerät für die Zubereitung eines heißen Getränks nach Anspruch 44, wobei der Griffüberhang (110) als eine Klappe geformt ist, die sich in der radialen Richtung relativ zu dem Pfad des Ventilkörpers (42) erstreckt.

46. Gerät für die Zubereitung eines heißen Getränks nach Anspruch 44 oder 45, wobei der Ventilkörper (42) zwei Griffüberhänge (110) umfasst, die einen Winkelversatz entlang der äußeren Wand des Ventilkörpers (42) aufweisen.

47. Gerät für die Zubereitung eines heißen Getränks nach einem der Ansprüche 17 bis 46, in welchem der Ventilkörper (42), in welchem der Verschluss (44) beherbergt ist, beweglich auf der Abgaberöhre (28) angebracht ist.

48. Gerät für die Zubereitung eines heißen Getränks nach Anspruch 47, in welchem ein Sitz (50) des Ventilkörpers (42) entfernbar auf der Abgaberöhre (28), und ein Deckel (54) beweglich auf dem Sitz (50) angebracht ist.

49. Gerät für die Zubereitung eines heißen Getränks nach Anspruch 48, wobei der Sitz (5) des Ventilkörpers (42) eine Düse definiert, die in Verbindung mit der Abgaberöhre (28) steht.

50. Gerät für die Zubereitung eines heißen Getränks nach Anspruch 48 oder 49, in welchem der Deckel (54) eine Bayonettverbindung mit der Abgaberöhre umfasst.

51. Gerät für die Zubereitung eines heißen Getränks nach Anspruch 50, in welchem die Bayonettverbindung zwischen der Abgaberöhre (28) und einem ringförmigen Bereich (84) des Deckels (54) bereitgestellt ist, der dafür ausgestaltet ist, einen Endbereich der Abgaberöhre (28) außen zu umschließen.

52. Gerät für die Zubereitung eines heißen Getränks nach Anspruch 50 oder 51, in welchem die Bayonettverbindung eine Nut (87a) in dem Deckel (54) umfasst, die in der Lage ist, einen Zahn (87) über einen Durchfluss (87b) aufzunehmen, wobei der Zahn aus einem Stück mit der Auslieferungsröhre (28) gebildet ist.

53. Gerät für die Zubereitung eines heißen Getränks nach Anspruch 52, in welchem die Bayonettverbindung einen Führung- und Immobilisierungsring (86) umfasst, der zwischen dem Sitz (50) und der Abgaberöhre (28) eingefügt ist, wobei der Führungs- und Immobilisierungsring (86) den Zahn (87) umfasst.

54. Gerät für die Zubereitung eines heißen Getränks nach Anspruch 52 oder 53, wobei der Durchfluss (87b) mit Nut (87a) mittels einer geneigten Ebene (114) verbunden ist.

55. Gerät für die Zubereitung eines heißen Getränks nach einem der Ansprüche 52 bis 54, wobei die Nut (87a) wenigstens ein Ende des Hubs (116) umfasst, gegen welches wenigstens ein Zahn (87) angrenzt.

56. Gerät für die Zubereitung eines heißen Getränks nach einem der Ansprüche 17 bis 55, wobei der Ventilkörper (42) einen Überhang (108) umfasst, der sich transversal dazu erstreckt.

57. Gerät für die Zubereitung eines heißen Getränks nach einem der Ansprüche 2 bis 56, wobei die Ventilmittel Mittel zum Verhindern des Zurücksaugens des Getränks in den Boiler umfasst.

58. Gerät für die Zubereitung eines heißen Getränks nach Anspruch 57, wenn abhängig von einem der Ansprüche 17 bis 56, in welchem der Ventilkörper (42) Mittel zum Verhindern, dass das Getränk zurück in den Boiler gesaugt wird, umfasst.

59. Gerät für die Zubereitung eines heißen Getränks nach Anspruch 58, in welchem die Mittel zum Verhindern des Zurücksaugens des Getränks in den Boiler Entlüftungsmittel umfassend.

60. Gerät für die Zubereitung eines heißen Getränks nach Anspruch 59, in welchem die Entlüftungsmittel eine kappillare Öffnung (62) umfassen.

61. Gerät für die Zubereitung eines heißen Getränks nach Anspruch 60, wenn abhängig von einem der Ansprüche 27 bis 56, in welchem die kapillare Öffnung (62) in derselben Leitung (56) auf einem Niveau ausgebildet ist, dass sie über dem Niveau des heißen Getränks, das in dem Sammelbehälter (14) vorhanden ist, bleibt.

62. Gerät für die Zubereitung eines heißen Getränks nach Anspruch 57, wobei die Mittel zum Verhindern des Zurücksaugens den Verschluss (44) umfassen, der geeignet ist, dem Druckabfall innerhalb des Boilers (12) folgend in die geschlossene Position zurückgerufen zu werden.

63. Gerät für die Zubereitung eines heißen Getränks nach Anspruch 62, wobei der Verschluss (44) einen ersten Bereich (44a) und einen zweiten Bereich (44b) umfasst, die einander derart zugeordnet sind, dass eine Relativbewegung zwischen beiden Bereichen erlaubt ist, wobei der erste Bereich (44a) sich relativ zum zweiten Bereich (44b), welcher in der geschlossenen Position immobilisiert ist, wegen dem Druckabfall innerhalb des Boilers (12) bewegt.

64. Gerät für die Zubereitung eines heißen Getränks nach Anspruch 63, wobei der zweite Bereich (44b) hohl ist und intern den ersten Bereich (44a) beherbergt.

65. Gerät für die Zubereitung eines heißen Getränks nach Anspruch 63 oder 64, wobei der erste Bereich (44a) koaxial in den zweiten Bereich (44b) entlang der Bewegungsrichtung des Verschlusses (44) eingefügt ist.

66. Gerät für die Zubereitung eines heißen Getränks nach Anspruch 65, wobei der erste Bereich (44a) relativ zum zweiten Bereich (44b) entlang der Bewegungsrichtung des Verschlusses gleitet.

67. Gerät für die Zubereitung eines heißen Getränks nach einem der Ansprüche 64 bis 66, wobei Hubende-Mittel (124) zwischen dem ersten Bereich (44a) und dem zweiten Bereich (44b) bereitgestellt sind, die geeignet sind, zu verhindern, dass der erste Bereich (44a) von dem zweiten Bereich (44b) abgetrennt werden kann.

68. Gerät für die Zubereitung eines heißen Getränks nach einem der Ansprüche 63 bis 67, wobei der erste Bereich eine Dichtung (64) umfasst.

69. Gerät für die Zubereitung eines heißen Getränks nach einem der Ansprüche 62 bis 68, wobei der zweite Bereich (44b) mit einem Bereich verbunden ist, der die Form eines Druckstücks (66) für die direkte Einwirkung durch den Benutzer auf den Verschluss (44) aufweist.

70. Gerät für die Zubereitung eines heißen Getränks nach einem der Ansprüche 2 bis 69, in welchem die Mittel zum Immobilisieren des Verschlusses derart angeordnet sind, dass sie durch Ausüben einer Kraft direkt auf den Verschluss derart deaktiviert werden können, dass sie ihn zu der geschlossenen Position zurückführen.

71. Gerät für die Zubereitung eines heißen Getränks nach einem der Ansprüche 2 bis 70, in welchem die Ventilmittel (40) einen Ventilkörper (42) umfassen, in welchem der Verschluss (44) beherbergt ist, der mit einem Einlass (46) bereitgestellt ist, welcher in der Lage ist, in Verbindung mit dem Auslass des Abgabepfades platziert zu werden, und mit einem Auslass (48) bereitgestellt ist, welcher in der Lage ist, in Verbindung mit dem Sammelbehälter (14) platziert zu werden, und in welchem der Verschluss (44) einen Bereich (66) umfasst, der sich außerhalb des Ventilkörpers (42) erstreckt.

72. Gerät für die Zubereitung eines heißen Getränks nach Anspruch 71, in welchem der Bereich (66), der sich außerhalb des Ventilkörpers (42) erstreckt, in der Form eines Druckstücks ist.

73. Gerät für die Zubereitung eines heißen Getränks nach Anspruch 71 oder 72, in welchem der Bereich (66), der sich außerhalb des Ventilkörpers (42) erstreckt, einen Bereich aufweist, der Abmessungen aufweist, die größer als die Abmessung einer Öffnung (68) des Ventilkörpers (42) ist, durch welche sich der Verschluss (44) erstreckt.

74. Gerät für die Zubereitung eines heißen Getränks nach einem der Ansprüche 71 bis 73, in welchem der Bereich (66), der sich außerhalb des Ventilkörpers (42) erstreckt, auf dem Verschluss (44) durch eine Öffnung (68) in dem Ventilkörper (42) angebracht ist.

75. Gerät für die Zubereitung eines heißen Getränks nach Anspruch 74, in welchem der Bereich (66), der sich außerhalb des Ventilkörpers (42) erstreckt, auf den Verschluss (44) geschraubt ist.

76. Gerät für die Zubereitung eines heißen Getränks nach einem der Ansprüche 71 bis 75, wobei der sich außerhalb des Ventilkörpers (42) erstreckende Bereich (66) ein Gewicht aufweist, das kalibriert ist, um den Druck in dem Boiler (12) auf einen Wert zu setzen, der geeignet ist, den Verschluss (44) anzuheben.

77. Gerät für die Zubereitung eines heißen Getränks nach einem der Ansprüche 2 bis 76, umfassend einen Deckel (32), der an den Sammelbehälter (14) drehbar angebracht ist und mit einer Öffnung (36) bereitgestellt ist, die in der Lage ist, einen Bereich (66) des Verschlusses (44) aufzunehmen.

78. Gerät für die Zubereitung eines heißen Getränks nach Anspruch 77, wenn abhängig von einem der Ansprüche 71 bis 76, in welchem die Öffnung (36) in der Lage ist, einen Bereich (66) des Verschlusses (44) aufzunehmen, der sich außerhalb des Ventilkörpers (42) erstreckt.

79. Gerät für die Zubereitung eines heißen Getränks nach Anspruch 77 oder 78, in welchem die Öffnung (36) zentral zu dem Deckel (32) und koaxial mit einer Abgaberöhre (28) ist, die einen Bereich des Abgabepfads definiert.

80. Gerät für die Zubereitung eines heißen Getränks nach einem der Ansprüche 77 bis 79, in welchem der Deckel (32) ein greifbares Element (38) umfasst, das sich in einer dezentralen Position des Deckels befindet.

81. Gerät für die Zubereitung eines heißen Getränks nach Anspruch 80, in welchem sich das greifbare Element (38) zwischen der Öffnung (36) und einem Griff (34) des Geräts befindet.

82. Gerät für die Zubereitung eines heißen Getränks nach Anspruch 81, in welchem das greifbare Element (38) sich auf einem vorstehenden Bereich (33) des Deckels (32) befindet.

83. Gerät für die Zubereitung eines heißen Getränks nach einem der Ansprüche 2 bis 82, wobei Mittel zum Zentrieren des Verschlusses (44) auf dem Einlass (46) bereitgestellt sind.

84. Gerät für die Zubereitung eines heißen Getränks nach Anspruch 83, wobei die Mittel zum Zentrieren des Verschlusses (44) eine den Einlass (46) umgebende definierende Oberfläche (128) umfasst, wobei die definierende Oberfläche (128) konkav oder zum Einlass hin geneigt ist zwischen einer äußeren Kante (128a), die sich näher an dem Verschluss (44) befindet, und einer inneren Kante (128b), die sich weniger nahe relativ zu dem Verschluss (44) befindet.

85. Gerät für die Zubereitung eines heißen Getränks nach Anspruch 84, wobei die definierende Oberfläche (128) relativ zu einer peripheren Oberfläche (130) einer den Einlass (46) definierenden Düse (50) angehoben ist.

86. Gerät für die Zubereitung eines heißen Getränks nach Anspruch 83, wobei die Mittel zum Zentrieren des Verschlusses (44) eine definierende Oberfläche (128) umfassen, die den Einlass (46) umgibt, wobei die definierende Oberfläche (128) konkav oder zu dem Einlass hin geneigt ist zwischen einer äußeren Kante (128a), die weniger nahe relativ zu dem Verschluss (44) ist, und einer inneren Kante (128b), die näher an dem Verschluss (44) ist.

87. Gerät für die Zubereitung eines heißen Getränks nach Anspruch 86, wobei die Mittel zum Zentrieren weiter eine ringförmige Rippe (132) umfassen, die die definierende Oberfläche umgibt, und wobei der Verschluss (44) geeignet ist, die innere Kante (128b) und die ringförmige Rippe (132) zu berühren.

88. Gerät für die Zubereitung eines heißen Getränks nach einem der Ansprüche 2 bis 56, wobei der Verschluss (44) einen ersten Bereich (44a) und einen zweiten Bereich (44b) umfasst, die derart einander zugeordnet sind, dass eine Relativbewegung zwischen beiden Bereichen erlaubt ist, wobei sich der erste Bereich (44a) relativ zum zweiten Bereich (44b) bewegt.

89. Gerät für die Zubereitung eines heißen Getränks nach Anspruch 88, wobei der zweite Bereich (44b) hohl ist und den ersten Bereich (44a) darin beherbergt.

90. Gerät für die Zubereitung eines heißen Getränks nach Anspruch 88 oder 89, wobei der erste Bereich (44a) koaxial in den zweiten Bereich (44b) entlang der Bewegungsrichtung des Verschlusses (44) eingefügt ist.

91. Gerät für die Zubereitung eines heißen Getränks nach Anspruch 90, wobei der erste Bereich (44a) relativ zum zweiten Bereich (44b) entlang der Bewegungsrichtung des Verschlusses gleitet.

92. Gerät für die Zubereitung eines heißen Getränks nach einem der Ansprüche 88 bis 91, wobei Hubende-Mittel (124) zwischen dem ersten Bereich (44a) und dem zweiten Bereich (44b) bereitgestellt sind, die geeignet sind, zu vehindern, dass der erste Bereich (44a) von dem zweiten Bereich (44b) abgetrennt werden kann.

93. Gerät für die Zubereitung eines heißen Getränks nach einem der Ansprüche 88 bis 92, wobei der erste Bereich (44a) eine Dichtung (64) umfasst.

94. Gerät für die Zubereitung eines heißen Getränks nach einem der Ansprüche 88 bis 93, wobei der zweite Bereich (44b) mit einem Bereich verbunden ist, der die Form eines Druckstücks (66) für direkte Einwirkung auf den Verschluss (44) durch den Benutzer aufweist.

95. Ventilmittel (40), geeignet, in dem Gerät (10) für die Zubereitung eines heißen Getränks nach einem der Ansprüche 1 bis 94 verwendet zu werden, wobei die Ventilmittel in der Lage sind, entlang des Abgabepfades angeordnet zu werden und einen Verschluss (44) umfassen, der zwischen einer Position bewegt werden kann, in welcher der Abgabepfad geschlossen ist und einer, in welcher er offen ist, und Mittel zum Immobilisieren des Verschlusses in der offenen Position umfassen, umfassend Mittel zum Erzeugen von Reibung entlang wenigstens eines Bereichs des Hubs des Verschlusses (44) relativ zu einem Bereich des Geräts, der relativ zu der Bewegung des Verschlusses (44) fixiert ist, um den Verschluss in der offenen Position zu immobilisieren.

96. Verfahren zum Zubereiten eines wenigstens eine Flüssigkomponente umfassenden heißen Getränks unter Verwendung einer Kaffeemaschine (10), welche einen Boiler (12) und einen Sammelbehälter (14) umfasst, wobei das Verfahren die folgenden Schritte umfasst:
Einrichten der Kaffeemaschine mit einer Menge der ersten Flüssigkomponente in dem Boiler (12),
Heizen des Boilers (12) auf einen voreingestellten Überdruck relativ zu dem Atmosphärendruck, bei welchem ein Verschluss (44), der entlang eines Abgabepfades der ersten Flüssigkomponente von dem Boiler zu dem Sammelbehälter angeordnet ist, den Abgabepfad öffnet, Immobilisieren des Verschlusses in der offenen Position des Abgabepfades, bis die erste Flüssigkomponente und der Dampf, die innerhalb des Boilers enthalten sind, vollständig abgegeben worden sind,
wobei der Verschluss (44) entweder zu der offenen Position des Abgabepfades immobilisiert ist oder von der offenen Position des Abgabepfades freigegeben ist, durch Reibungsmittel, die zwischen dem Verschluss (44) und einem Bereich der Vorrichtung (10), der relativ zu der Bewegung des Verschlusses fixiert ist, erzeugt wird, wobei die Reibung geeignet ist, den Verschluss (44) in der offenen Position zu erhalten.

## Revendications

1. Equipement (10) pour la préparation d'une boisson chaude, comportant un générateur de vapeur (12) conçu pour contenir un constituant liquide de ladite boisson, un récipient collecteur (14) et des moyens (22, 20, 28) destinés à définir un trajet de distribution pour ledit constituant liquide depuis le générateur de vapeur jusqu'au récipient collecteur,
ledit équipement comportant aussi un moyen à valve (40) placé le long du trajet de distribution pour ledit constituant liquide comportant un bouchon (44) qui peut se déplacer entre une position dans laquelle le trajet de distribution est fermé et une position dans laquelle il est ouvert, et des moyens (70, 72 ; 74, 76 ; 78) destinés à immobiliser l'obturateur dans la position ouverte,
**caractérisé en ce que** lesdits moyens destinés à immobiliser l'obturateur (44) comprennent des moyens destinés à générer un frottement le long d'au moins une partie de la course de l'obturateur (44) par rapport à une partie de l'équipement (10) qui est fixe par rapport au mouvement de l'obturateur (44) afin d'immobiliser l'obturateur dans la position ouverte.

2. Equipement pour la préparation d'une boisson chaude selon la revendication 1, dans lequel lesdits moyens destinés à immobiliser l'obturateur sont agencés d'une manière telle qu'ils peuvent être activés et désactivés par une force exercée suivant la direction du mouvement de l'obturateur.

3. Equipement pour la préparation d'une boisson chaude selon la revendication 2, dans lequel lesdits moyens peuvent être activés par un mouvement de l'obturateur entre la position fermée et la position ouverte.

4. Equipement pour la préparation d'une boisson chaude selon la revendication 2 ou 3, dans lequel ledit obturateur peut se déplacer dans une direction coïncidant avec la direction de la force de la gravité.

5. Equipement pour la préparation d'une boisson chaude selon la revendication 2, dans lequel lesdits moyens destinés à générer un frottement sont interposés entre l'obturateur (44) et un corps de valve dudit moyen à valve (42).

6. Equipement pour la préparation d'une boisson chaude selon la revendication 5, dans lequel lesdits moyens destinés à générer un frottement sont aptes à être interposés entre l'obturateur (44) et un siège coulissant (98) dudit corps de valve (42) à l'intérieur duquel ledit obturateur (44) est déplacé.

7. Equipement pour la préparation d'une boisson chaude selon la revendication 6, dans lequel lesdits moyens destinés à générer un frottement entourent une tige (100) dudit obturateur (44) logé dans ledit siège coulissant (98) et sont aptes à générer un frottement contre les parois dudit siège coulissant (98).

8. Equipement pour la préparation d'une boisson chaude selon la revendication 7, dans lequel lesdits moyens destinés à générer un frottement se déplacent avec l'obturateur (44).

9. Equipement pour la préparation d'une boisson chaude selon la revendication 2 ou l'une des revendications 5 à 8, dans lequel lesdits moyens destinés à générer un frottement comprennent un élément annulaire (102).

10. Equipement pour la préparation d'une boisson chaude selon la revendication 9, dans lequel ledit élément annulaire (102) est logé sur l'obturateur (44) et est apte à générer un frottement contre les parois d'un siège coulissant (98) d'un corps de valve (42) logeant ledit obturateur (44).

11. Equipement pour la préparation d'une boisson chaude selon la revendication 10, dans lequel ledit élément annulaire (102) est logé dans une gorge annulaire (104) de l'obturateur (44), faisant saillie de celle-ci pour entrer en contact serré avec les parois du siège coulissant (98).

12. Equipement pour la préparation d'une boisson chaude selon l'une des revendications 9 à 11, dans lequel ledit élément annulaire (102) est agencé de façon à générer un frottement dans une longueur extrême de la course de l'obturateur entre la position fermée et la position ouverte.

13. Equipement pour la préparation d'une boisson chaude selon l'une des revendications 9 à 12, dans lequel ledit élément annulaire (102) est formé au moyen d'un joint ou d'une bague torique.

14. Equipement pour la préparation d'une boisson chaude selon l'une des revendications 2 à 13, dans lequel ledit trajet de distribution est défini au moins partiellement par un tuyau de distribution (28) qui s'ouvre dans ledit récipient collecteur (14) et dans lequel lesdits moyens à valve (40) sont placés à la sortie dudit tuyau de distribution (28).

15. Equipement pour la préparation d'une boisson chaude selon la revendication 14, dans lequel ledit tuyau de distribution (28) s'étend au moins partiellement à l'intérieur du récipient collecteur (14) le long d'un axe (X), et dans lequel lesdits moyens à valve (40) sont placés à la sortie dudit tuyau de distribution (28) dans le prolongement dudit axe (X).

16. Equipement pour la préparation d'une boisson chaude selon la revendication 15, dans lequel ledit obturateur (44) peut se déplacer le long dudit axe (X).

17. Equipement pour la préparation d'une boisson chaude selon l'une des revendications 14 à 16, dans lequel lesdits moyens à valve (40) comprennent un corps de valve (42) qui loge l'obturateur (40) pourvu d'une entrée (46) pouvant être placée en communication avec la sortie du tuyau de distribution (28) et d'une sortie (48) pouvant être placée en communication avec ledit récipient collecteur (14).

18. Equipement pour la préparation d'une boisson chaude selon la revendication 17, dans lequel lesdits moyens d'immobilisation se trouvent à l'intérieur dudit corps de valve (42).

19. Equipement pour la préparation d'une boisson chaude selon la revendication 18, dans lequel une première partie dudit moyen d'immobilisation est associée audit obturateur (44).

20. Equipement pour la préparation d'une boisson chaude selon la revendication 19, dans lequel une seconde partie dudit moyen d'immobilisation est associée à une partie fixe dudit équipement.

21. Equipement pour la préparation d'une boisson chaude selon la revendication 20, dans lequel une seconde partie desdits moyens d'immobilisation est associée audit corps de valve (42).

22. Equipement pour la préparation d'une boisson chaude selon la revendication 21, dans lequel une seconde partie dudit moyen d'immobilisation est associée à un couvercle (54) dudit corps de valve (42).

23. Equipement pour la préparation d'une boisson chaude selon l'une des revendications 17 à 22, dans lequel ladite entrée (46) dudit corps de valve (42) est le long du même axe que ledit trajet de distribution (28).

24. Equipement pour la préparation d'une boisson chaude selon la revendication 23, dans lequel ladite sortie (48) du corps de valve (42) est placée latéralement à l'entrée (46) par rapport audit axe (X) de la valve de distribution (28).

25. Equipement pour la préparation d'une boisson chaude selon l'une des revendications 17 à 24, dans lequel ledit tuyau de distribution (28) comporte un prolongement à l'intérieur du récipient collecteur (14) afin de maintenir l'entrée (46) du corps de valve (42) au-dessus de la surface de la boisson chaude présente dans le récipient collecteur (14).

26. Equipement pour la préparation d'une boisson chaude selon la revendication 25, dans lequel la sortie (48) dudit corps de valve (42) est placée à un niveau inférieur à celui de l'entrée (46) dudit corps de valve (42).

27. Equipement pour la préparation d'une boisson chaude selon la revendication 26, dans lequel ledit corps de valve (42) comporte au moins un conduit (56) ayant une extrémité libre définissant ladite sortie (48) du corps de valve (42).

28. Equipement pour la préparation d'une boisson chaude selon la revendication 27, dans lequel ledit conduit (56) s'étend vers le bas depuis un fond dudit corps de valve (42).

29. Equipement pour la préparation d'une boisson chaude selon la revendication 28, dans lequel l'étendue entière dudit conduit (56) est située en dessous de ladite entrée (46) du corps de valve (42).

30. Equipement pour la préparation d'une boisson chaude selon la revendication 27, dans lequel ledit conduit (56) s'étend latéralement par rapport au corps de valve (42).

31. Equipement pour la préparation d'une boisson chaude selon l'une des revendications 27 à 30, dans lequel ledit conduit (56) est monté de manière mobile sur le corps de valve (42).

32. Equipement pour la préparation d'une boisson chaude selon l'une des revendications 27 à 30, dans lequel ledit conduit (56) est d'une pièce avec le corps de valve (42).

33. Equipement pour la préparation d'une boisson chaude selon l'une des revendications 27 à 30, dans lequel ledit conduit (56) est formé partiellement d'une pièce avec le corps de valve (42), une partie de fermeture (106) dudit conduit (56) étant appliquée sur le corps de valve (42).

34. Equipement pour la préparation d'une boisson chaude selon l'une des revendications 27 à 33, dans lequel ledit conduit (56) comporte une saillie (108) s'étendant transversalement à lui et au corps de valve (42).

35. Equipement pour la préparation d'une boisson chaude selon l'une des revendications 27 à 34, dans lequel ledit conduit (56) est droit.

36. Equipement pour la préparation d'une boisson chaude selon l'une des revendications 27 à 35, dans lequel ledit conduit (56) comporte une partie terminale (58) qui est inclinée par rapport à une partie de fixation (60) entre ledit conduit (56) et le corps de valve (42).

37. Equipement pour la préparation d'une boisson chaude selon l'une des revendications 27 à 36, dans lequel ledit, au moins un, conduit (56) comporte au moins une partie (58) parallèle audit axe (X) du tuyau de distribution (28).

38. Equipement pour la préparation d'une boisson chaude selon la revendication 37, dans lequel ledit conduit (56) comporte une partie terminale (58) qui est inclinée par rapport à la direction dudit axe (X).

39. Equipement pour la préparation d'une boisson chaude selon la revendication 38, dans lequel ladite partie terminale (58) dudit conduit (56) est inclinée dans une direction tangente à une circonférence centrée sur ledit axe (X).

40. Equipement pour la préparation d'une boisson chaude selon l'une des revendications 27 à 39, dans lequel ledit conduit comporte une buse (88) placée à la sortie (48) et définissant une section transversale de passage qui est inférieure à la section transversale de passage du conduit (56).

41. Equipement pour la préparation d'une boisson chaude selon la revendication 40, dans lequel ladite buse (88) est un élément séparé dudit conduit (56) et est apte à être insérée dans un siège élargi (90) du conduit.

42. Equipement pour la préparation d'une boisson chaude selon la revendication 41, dans lequel ladite buse (88) fait saillie en dessous du conduit (56).

43. Equipement pour la préparation d'une boisson chaude selon l'une des revendications 40 à 42, dans lequel ledit conduit (56) comporte une paroi inférieure (92) inclinée par rapport au trajet du tuyau de distribution (28) de manière que la buse (88) soit également inclinée par rapport à la direction du trajet du tuyau de distribution (28).

44. Equipement pour la préparation d'une boisson chaude selon l'une des revendications 17 à 43, dans lequel ledit corps de valve (42) comporte au moins une saillie de prise (110) s'étendant transversalement au corps de valve pour faciliter le positionnement des moyens à valve (40) sur le tuyau de distribution (28).

45. Equipement pour la préparation d'une boisson chaude selon la revendication 44, dans lequel ladite saillie de prise (110) est réalisée sous la forme d'une patte s'étendant dans la direction radiale par rapport au trajet du corps de valve (42).

46. Equipement pour la préparation d'une boisson chaude selon la revendication 44 ou 45, dans lequel ledit corps de valve (42) comporte deux saillies de prise (110) qui sont décalées angulairement le long de la paroi extérieure du corps de valve (42).

47. Equipement pour la préparation d'une boisson chaude selon l'une des revendications 17 à 46, dans lequel ledit corps de valve (42), dans lequel est logé l'obturateur (44), est monté de façon mobile sur le tuyau de distribution (28).

48. Equipement pour la préparation d'une boisson chaude selon la revendication 47, dans lequel un siège (50) du corps de valve (42) est monté de façon amovible sur le tuyau de distribution (28) et un bouchon (54) est monté de façon mobile sur ledit siège (50).

49. Equipement pour la préparation d'une boisson chaude selon la revendication 48, dans lequel ledit siège (50) du corps de valve (42) définit une buse communiquant avec ledit tuyau de distribution (28).

50. Equipement pour la préparation d'une boisson chaude selon la revendication 48 ou 49, dans lequel ledit bouchon (54) comporte un raccord à baïonnette avec ledit tuyau de distribution.

51. Equipement pour la préparation d'une boisson chaude selon la revendication 50, dans lequel ledit raccord à baïonnette est prévu entre ledit tuyau de distribution (28) et une partie annulaire (84) dudit bouchon (54) qui est conçue pour entourer extérieurement une partie extrême du tuyau de distribution (28).

52. Equipement pour la préparation d'une boisson chaude selon la revendication 50 ou 51, dans lequel ledit raccord à baïonnette comporte une gorge (87a) dans ledit bouchon (54) qui est capable de recevoir une dent (87) en passant par un passage (87b), ladite dent étant d'une pièce avec le tuyau de distribution (28).

53. Equipement pour la préparation d'une boisson chaude selon la revendication 52, dans lequel ledit raccord à baïonnette comporte un anneau de guidage et d'immobilisation (86) inséré entre le siège (50) et le tuyau de distribution (28), ledit anneau de guidage et d'immobilisation (86) comportant ladite dent (87).

54. Equipement pour la préparation d'une boisson chaude selon la revendication 52 ou 53, dans lequel ledit passage (87b) est raccordé à une gorge (87a) au moyen d'un plan incliné (114).

55. Equipement pour la préparation d'une boisson chaude selon l'une des revendications 52 à 54, dans lequel ladite gorge (87a) comporte au moins une butée de fin de course (116) contre laquelle au moins une dent (87) vient en appui.

56. Equipement pour la préparation d'une boisson chaude selon l'une des revendications 17 à 55, dans lequel ledit corps de valve (42) comporte une saillie (108) s'étendant transversalement à lui.

57. Equipement pour la préparation d'une boisson chaude selon l'une des revendications 2 à 56, dans lequel lesdits moyens à valve comprennent des moyens destinés à empêcher la boisson d'être ramenée par aspiration dans le générateur de vapeur.

58. Equipement pour la préparation d'une boisson chaude selon la revendication 57 lorsqu'elle dépend de l'une des revendications 17 à 56, dans lequel ledit corps de valve (42) comporte des moyens destinés à empêcher la boisson d'être ramenée par aspiration dans le générateur de vapeur.

59. Equipement pour la préparation d'une boisson chaude selon la revendication 58, dans lequel lesdits moyens pour empêcher la boisson d'être ramenée par aspiration dans le générateur de vapeur comprennent des moyens d'évent.

60. Equipement pour la préparation d'une boisson chaude selon la revendication 59, dans lequel lesdits moyens d'évent comprennent une ouverture capillaire (62).

61. Equipement pour la préparation d'une boisson chaude selon la revendication 60, lorsqu'elle dépend de l'une des revendications 27 à 56, dans lequel ladite ouverture capillaire (62) est réalisée dans le même conduit (56) à un niveau tel qu'elle reste au-dessus du niveau de la boisson chaude présente dans le récipient collecteur (14).

62. Equipement pour la préparation d'une boisson chaude selon la revendication 57, dans lequel lesdits moyens destinés à empêcher le retour par aspiration comprennent ledit obturateur (44) apte à être rappelé dans la position fermée à la suite d'une baisse de la pression dans le générateur de vapeur (12).

63. Equipement pour la préparation d'une boisson chaude selon la revendication 62, dans lequel ledit obturateur (44) comporte une première partie (44a) et une seconde partie (44b) associées entre elles pour permettre un mouvement relatif entre les deux parties, ladite première partie (44a) se déplaçant par rapport à ladite seconde partie (44b), qui est immobilisée dans la position fermée, du fait de la baisse de pression à l'intérieur du générateur de vapeur (12).

64. Equipement pour la préparation d'une boisson chaude selon la revendication 63, dans lequel ladite seconde partie (44b) est creuse et loge intérieurement ladite première partie (44a).

65. Equipement pour la préparation d'une boisson chaude selon la revendication 63 ou 64, dans lequel ladite première partie (44a) est introduite coaxialement dans ladite seconde partie (44b) suivant la direction du mouvement dudit obturateur (44).

66. Equipement pour la préparation d'une boisson chaude selon la revendication 65, dans lequel ladite première partie (44a) coulisse par rapport à ladite seconde partie (44b) le long de ladite direction de mouvement dudit obturateur.

67. Equipement pour la préparation d'une boisson chaude selon l'une des revendications 64 à 66, dans lequel il est prévu des moyens de fin de course (124) entre ladite première partie (44a) et ladite seconde partie (44b) qui sont aptes à empêcher que la première partie (44a) puisse être détachée de la seconde partie (44b).

68. Equipement pour la préparation d'une boisson chaude selon l'une des revendications 63 à 67, dans lequel ladite première partie comporte un joint d'étanchéité (64).

69. Equipement pour la préparation d'une boisson chaude selon l'une des revendications 62 à 68, dans lequel ladite seconde partie (44b) est reliée à une partie ayant la forme d'un plongeur (66) pour une opération directe par l'opérateur sur l'obturateur (44).

70. Equipement pour la préparation d'une boisson chaude selon l'une des revendications 2 à 69, dans lequel lesdits moyens destinés à immobiliser l'obturateur sont agencés d'une manière telle qu'ils peuvent être désactivés en exerçant une force directement sur ledit obturateur afin de le ramener dans la position fermée.

71. Equipement pour la préparation d'une boisson chaude selon l'une des revendications 2 à 70, dans lequel lesdits moyens à valve (40) comprennent un corps de valve (42) dans lequel est logé l'obturateur (44) pourvu d'une entrée (46) pouvant être placée en communication avec la sortie dudit trajet de distribution et d'une sortie (48) qui peut être placée en communication avec ledit récipient collecteur (14), et dans lequel ledit obturateur (44) comporte une partie (66) qui s'étend à l'extérieur du corps de valve (42).

72. Equipement pour la préparation d'une boisson chaude selon la revendication 71, dans lequel ladite partie (66) qui s'étend à l'extérieur du corps de valve (42) est de la forme d'un plongeur.

73. Equipement pour la préparation d'une boisson chaude selon la revendication 71 ou 72, dans lequel ladite partie (66) s'étendant vers l'extérieur du corps de valve (42) comporte une partie ayant des dimensions supérieures à la dimension d'une ouverture (68) dudit corps de valve (42) à travers laquelle s'étend ledit obturateur (44).

74. Equipement pour la préparation d'une boisson chaude selon l'une des revendications 71 à 73, dans lequel ladite partie (66) s'étendant à l'extérieur du corps de valve (42) est montée sur ledit obturateur (44) à travers une ouverture (68) dans ledit corps de valve (42).

75. Equipement pour la préparation d'une boisson chaude selon la revendication 74, dans lequel ladite partie (66) qui s'étend à l'extérieur du corps de valve (42) est vissée sur ledit obturateur (44).

76. Equipement pour la préparation d'une boisson chaude selon l'une des revendications 71 à 75, dans lequel ladite partie (66) s'étendant à l'extérieur du corps de valve (42) a un poids étalonné pour régler la pression dans le générateur de vapeur (12) à une vapeur appropriée pour faire monter ledit obturateur (44).

77. Equipement pour la préparation d'une boisson chaude selon l'une des revendications 2 à 76, comportant un couvercle (32) articulé sur le récipient collecteur (14) et pourvu d'une ouverture (36) pouvant recevoir une partie (66) dudit obturateur (44).

78. Equipement pour la préparation d'une boisson chaude selon la revendication 77 lorsqu'elle dépend de l'une des revendications 71 à 76, dans lequel ladite ouverture (36) peut recevoir une partie (66) dudit obturateur (44) s'étendant à l'extérieur du corps de valve (42).

79. Equipement pour la préparation d'une boisson chaude selon la revendication 77 ou 78, dans lequel ladite ouverture (36) est centrale par rapport au couvercle (32) et coaxiale avec un tuyau de distribution (28) définissant une partie dudit trajet de distribution.

80. Equipement pour la préparation d'une boisson chaude selon l'une des revendications 77 à 79, dans lequel ledit couvercle (32) comporte un élément (38) pouvant être saisi, placé dans une position décentrée sur le couvercle.

81. Equipement pour la préparation d'une boisson chaude selon la revendication 80, dans lequel ledit élément (38) pouvant être saisi est situé entre ladite ouverture (36) et une poignée (34) dudit équipement.

82. Equipement pour la préparation d'une boisson chaude selon la revendication 81, dans lequel ledit élément (38) pouvant être saisi est situé sur une partie en saillie (33) du couvercle (32).

83. Equipement pour la préparation d'une boisson chaude selon l'une des revendications 2 à 82, dans lequel il est prévu des moyens pour centrer l'obturateur (44) sur l'entrée (46).

84. Equipement pour la préparation d'une boisson chaude selon la revendication 83, dans lequel lesdits moyens pour centrer l'obturateur (44) comprennent une surface de définition (128) entourant ladite entrée (46), ladite surface de définition (128) étant concave ou inclinée vers l'entrée entre un bord extérieur (128a) qui est plus proche de l'obturateur (44) et un bord intérieur (128b) qui est moins proche de l'obturateur (44).

85. Equipement pour la préparation d'une boisson chaude selon la revendication 84, dans lequel ladite surface de définition (128) est surélevée par rapport à une surface périphérique (130) d'une buse (50) définissant ladite entrée (46).

86. Equipement pour la préparation d'une boisson chaude selon la revendication 83, dans lequel lesdits moyens pour le centrage de l'obturateur (44) comprennent une surface de définition (128) entourant ladite entrée (46), ladite surface de définition (128) étant concave ou inclinée vers l'entrée entre un bord extérieur (128a) qui est moins proche de l'obturateur (44) et un bord intérieur (128b) qui est plus proche de l'obturateur (44).

87. Equipement pour la préparation d'une boisson chaude selon la revendication 86, dans lequel lesdits moyens pour le centrage comprennent en outre une nervure annulaire (132) entourant la surface de définition, et dans lequel l'obturateur (44) est apte à entrer en contact avec ledit bord intérieur (128b) et ladite nervure annulaire (132).

88. Equipement pour la préparation d'une boisson chaude selon l'une des revendications 2 à 56, dans lequel ledit obturateur (44) comporte une première partie (44a) et une seconde partie (44b) associées l'une à l'autre de manière à permettre un mouvement relatif entre les deux parties, ladite première partie (44a) se déplaçant par rapport à ladite seconde partie (44b).

89. Equipement pour la préparation d'une boisson chaude selon la revendication 88, dans lequel ladite seconde partie (44b) est creuse et loge en elle ladite première partie (44a).

90. Equipement pour la préparation d'une boisson chaude selon la revendication 88 ou 89, dans lequel ladite première partie (44a) est introduite coaxialement dans ladite seconde partie (44b) suivant la direction de mouvement dudit obturateur (44).

91. Equipement pour la préparation d'une boisson chaude selon la revendication 90, dans lequel ladite première partie (44a) coulisse par rapport à ladite seconde partie (44b) le long de ladite direction de mouvement dudit obturateur.

92. Equipement pour la préparation d'une boisson chaude selon l'une des revendications 88 à 91, dans lequel des moyens de fin de course (124) sont prévus entre ladite première partie (44a) et ladite seconde partie (44b), aptes à empêcher que la première partie (44a) puisse être détachée de la seconde partie (44b).

93. Equipement pour la préparation d'une boisson chaude selon l'une des revendications 88 à 92, dans lequel ladite première partie (44a) comporte un joint d'étanchéité (64).

94. Equipement pour la préparation d'une boisson chaude selon l'une des revendications 88 à 93, dans lequel ladite seconde partie (44b) est raccordée à une partie ayant la forme d'un plongeur (66) pour une action directe par l'opérateur sur l'obturateur (44).

95. Moyens à valve (40) pouvant être utilisés dans un équipement (10) pour la préparation d'une boisson chaude selon l'une des revendications 1 à 94, lesdits moyens à valve pouvant être placés le long du trajet de distribution et comportant un obturateur (44) qui peut se déplacer entre une position dans laquelle le trajet de distribution est fermé et une position dans laquelle il est ouvert, et des moyens pour immobiliser le plongeur dans la position ouverte, comportant des moyens destinés à générer un frottement le long d'au moins une partie de la course de l'obturateur (44) par rapport à une partie de l'équipement qui est fixe par rapport au mouvement de l'obturateur (44) afin d'immobiliser l'obturateur dans la position ouverte.

96. Procédé de préparation d'une boisson chaude comprenant au moins un premier constituant liquide, en utilisant une cafetière (10) comportant un générateur de vapeur (12) et un récipient collecteur (14), ledit procédé comprenant les étapes qui consistent :
à pourvoir la cafetière d'une quantité dudit premier constituant liquide dans le générateur de vapeur (12),
à chauffer le générateur de vapeur (12) jusqu'à une surpression préréglée par rapport à la pression atmosphérique, à laquelle un obturateur (44), disposé le long d'un trajet de distribution du premier constituant liquide depuis le générateur de vapeur jusqu'au récipient collecteur, ouvre ledit trajet de distribution,
à immobiliser ledit obturateur dans la position ouverte du trajet de distribution jusqu'à ce que le premier constituant liquide et la vapeur contenue dans le générateur de vapeur aient été complètement distribués,
dans lequel ledit obturateur (44) est soit immobilisé dans, soit libéré de, ladite position ouverte du trajet de distribution au moyen d'un frottement généré entre l'obturateur (44) et une partie de l'équipement (10) qui est fixe par rapport au mouvement de l'obturateur, ledit frottement étant apte à maintenir l'obturateur (44) dans la position ouverte.
